# EUROPEAN PATENT APPLICATION

(11) **EP 4 590 011 A1**
(43) Date of publication of application: **23.07.2025**
(21) Application number: 23859187.9
(22) Date of filing: 21.08.2023
(51) Int. Cl.: H04W 16/10

(54) **METHOD AND APPARATUS FOR USE IN NODE FOR WIRELESS COMMUNICATION**

(30) Priority: 27.08.2022 CN 202211035867; 31.03.2023 CN 202310342620
(71) Applicant: Apogee Networks, LLC, Dallas, TX 75201 (US)
(72) Inventor: WU, Lu, Shanghai 201206 (CN); ZHANG, Xiaobo, Shanghai 201206 (CN)
(74) Representative: Gunzelmann, Rainer
(86) International application number: PCT/CN2023/113981
(87) International publication number: WO 2024/046153

(57) **Abstract**

The present application discloses a method and apparatus for use in a node for wireless communication. A first node receives a first information block set; first signaling is received; and a first signal is received. The first information block set indicates a first TCI state and a second TCI state, and the first TCI state and the second TCI state are respectively applied to a first type of PDSCH and a second-type of PDSCH in a first serving cell, or the first TCI state and the second TCI state are two TCI states configured for the first serving cell; and the first signaling is used for scheduling or triggering the first signal, and a quasi co-location parameter of the first signal depends on whether a physical cell identity associated with at least one of the first TCI state and the second TCI state is the same as a physical cell identity of the first serving cell.

## Description

### Technical Field

The present application relates to transmission methods and apparatuses in wireless communication systems, in particular to transmission methods and apparatuses for wireless signals in wireless communication systems supporting cellular networks.

### Background Art

In LTE (Long-Term Evolution) systems, inter-cell handover is controlled by base stations based on measurements from UE (User Equipment). The inter-cell handover in 3GPP (3rd Generation Partnership Project) R (Release) 15 essentially follows the same mechanism as in LTE. Subsequently, 3GPP R17 introduced TCI (Transmission Configuration Indicator) states associated with physical cell identities (PCIs) that are different from a physical cell identity of the first serving cell. This enables fast inter-cell beam switching and improves performance for cell-edge users.

### Summary of the Invention

Through research, the inventors found that determining quasi co-location parameters of signals is a critical technical challenge.

In response to the above-mentioned problems, the present application discloses a solution. It should be noted that although the above description uses a cellular network as an example, the present application is also applicable to other scenarios such as V2X (Vehicle-to-Everything) scenarios, and achieves technical effects similar to those in a cellular network. In addition, the adoption of a unified solution in different scenarios (including but not limited to downlink, uplink and sidelink) can also help reduce hardware complexity and costs. It should be noted that in case of no conflict, the embodiments and features in the embodiments of the user equipment of the present application may be applied to base stations, and vice versa. In the case of no conflict, the embodiments and the features in the embodiments in the present application can be arbitrarily combined with each other.

As one embodiment, the explanation of the terminology in the present application refers to the definitions in the TS36 series of the specification protocol of 3GPP.

As one embodiment, the explanation of the terminology in the present application refers to the definitions in the TS38 series of the specification protocol of 3GPP.

As one embodiment, the explanation of the terminology in the present application refers to the definitions in the TS37 series of the specification protocol of 3GPP.

As one embodiment, the explanation of the terminology in the present application refers to definitions in the specification protocol of IEEE (Institute of Electrical and Electronics Engineers).

The present application discloses a method for use in a first node for wireless communication, comprising:
receiving a first information block set;
receiving first signaling; and
receiving a first signal;
wherein the first information block set indicates a first TCI state and a second TCI state; the first TCI state and the second TCI state are respectively applied to a first type of PDSCH and a second type of PDSCH in the first serving cell, or the first TCI state and the second TCI state are two TCI states configured for the first serving cell; and the first signaling is used for scheduling or triggering the first signal, and a quasi co-location parameter of the first signal depends on whether a physical cell identity associated with at least one of the first TCI state and the second TCI state is the same as a physical cell identity of the first serving cell.

As one embodiment, the problem to be solved by the present application includes: how to determine quasi co-location parameters of signals.

According to one aspect of the present application, comprising:
receiving a second information block set;
wherein the second information block set is carried by higher layer signaling, and the second information block set is used for configuring N CORESETs of the first serving cell, N being a positive integer greater than 1; any CORESET of the N CORESETs belongs to a first CORESET pool or a second CORESET pool, at least one CORESET of the N CORESETs belongs to the first CORESET pool, at least one CORESET of the N CORESETs belongs to the second CORESET pool, the first CORESERT pool comprises at least one CORESET, the second CORESET pool comprises at least one CORESET, and the first CORESET pool and the second CORESET pool are different; the first TCI state and the second TCI state are respectively applied to a first type of PDSCH and a second type of PDSCH in the first serving cell; and a PDCCH scheduling the first type of PDSCH belongs to the first CORESET pool, and a PDCCH scheduling the second type of PDSCH belongs to the second CORESET pool.

According to one aspect of the present application, the quasi co-location parameter of the first signal depends on whether a physical cell identity associated with a target TCI state is the same as a physical cell identity of the first serving cell, the target TCI state being one of the first TCI state or the second TCI state; a CORESET to which the first signaling belongs belongs to one of the first CORESERT pool or the second CORESERT pool, and a target CORESET pool is one CORESET pool of the first CORESET pool and the second CORESET pool that comprises the CORESET to which the first signaling belongs; when the target CORESET pool is the first CORESERT pool, the target TCI state is the first TCI state; and when the target CORESET pool is the second CORESERT pool, the target TCI state is the second TCI state.

According to one aspect of the present application, when a physical cell identity associated with the target TCI state is a physical cell identity of the first serving cell, the target TCI state is used for determining the quasi co-location parameter of the first signal; when a physical cell identity associated with the target TCI state is different from a physical cell identity of the first serving cell, a reference TCI state is used for determining the quasi co-location parameter of the first signal; and the reference TCI state is a TCI state configured for a reference CORESET, and the reference CORESET is a CORESET with a smallest index that is associated with a monitored search space and belongs to the target CORESET pool in a most recent time slot where the first node monitors one or more CORESETs belonging to the target CORESET pool.

According to one aspect of the present application, the quasi co-location parameter of the first signal depends on whether a physical cell identity associated with the target TCI state is the same as the physical cell identity of the first serving cell if and only if a first condition is satisfied; and the first condition comprises: the first node is configured to monitor a first type of DCI in at least one search space set associated with a CORESET in the target CORESET pool.

According to one aspect of the present application, the quasi co-location parameter of the first signal depends on whether physical cell identities respectively associated with the first TCI state and the second TCI state are the same as the physical cell identity of the first serving cell; and when the physical cell identities respectively associated with the first TCI state and the second TCI state are both the same as the physical cell identity of the first serving cell, one of the first TCI state or the second TCI state is used for determining the quasi co-location parameter of the first signal.

According to one aspect of the present application, when a physical cell identity associated with only one of the first TCI state and the second TCI state is the same as a physical cell identity of the first serving cell, the one of the first TCI state and the second TCI state whose associated physical cell identity is the same as the physical cell identity of the first serving cell is used for determining the quasi co-location parameter of the first signal.

According to one aspect of the present application, the quasi co-location parameter of the first signal depends on whether a physical cell identity associated with a target TCI state is the same as a physical cell identity of the first serving cell, the target TCI state being one of the first TCI state or the second TCI state.

According to one aspect of the present application, when a physical cell identity associated with the target TCI state is a physical cell identity of the first serving cell, the target TCI state is used for determining the quasi co-location parameter of the first signal; when a physical cell identity associated with the target TCI state is different from a physical cell identity of the first serving cell, a reference TCI state is used for determining the quasi co-location parameter of the first signal; and the reference TCI state is one TCI state configured for a reference CORESET; and the reference CORESET is a CORESET with the smallest index that is associated with a monitored search space in a most recent slot where the first node monitors one or more CORESETs of the first serving cell.

The present application discloses a method for use in a second node for wireless communication, comprising:
sending a first information block set; sending first signaling; and sending a first signal;
wherein the first information block set indicates a first TCI state and a second TCI state; the first TCI state and the second TCI state are respectively applied to a first type of PDSCH and a second type of PDSCH in a first serving cell, or the first TCI state and the second TCI state are two TCI states configured for the first serving cell; and the first signaling is used for scheduling or triggering the first signal, and a quasi co-location parameter of the first signal depends on whether a physical cell identity associated with at least one of the first TCI state and the second TCI state is the same as a physical cell identity of the first serving cell.

According to one aspect of the present application, comprising:
sending a second information block set;
wherein the second information block set is carried by higher layer signaling, and the second information block set is used for configuring N CORESETs of the first serving cell, N being a positive integer greater than 1; any CORESET of the N CORESETs belongs to a first CORESET pool or a second CORESET pool, at least one CORESET of the N CORESETs belongs to the first CORESET pool, at least one CORESERT of the N CORESETs belongs to the second CORESET pool, the first CORESET pool comprises at least one CORESET, the second CORESET pool comprises at least one CORESET, and the first CORESET pool and the second CORESET pool are different; the first TCI state and the second TCI state are respectively applied to a first type of PDSCH and a second type of PDSCH in the first serving cell; and a PDCCH scheduling the first type of PDSCH belongs to the first CORESET pool, and a PDCCH scheduling the second type of PDSCH belongs to the second CORESET pool.

According to one aspect of the present application, the quasi co-location parameter of the first signal depends on whether a physical cell identity associated with a target TCI state is the same as a physical cell identity of the first serving cell, the target TCI state being one of the first TCI state or the second TCI state; a CORESET to which the first signaling belongs belongs to one of the first CORESERT pool or the second CORESERT pool, and a target CORESET pool is one CORESET pool of the first CORESET pool and the second CORESET pool that comprises the CORESET to which the first signaling belongs; when the target CORESET pool is the first CORESERT pool, the target TCI state is the first TCI state; and when the target CORESET pool is the second CORESERT pool, the target TCI state is the second TCI state.

According to one aspect of the present application, when a physical cell identity associated with the target TCI state is a physical cell identity of the first serving cell, the target TCI state is used for determining the quasi co-location parameter of the first signal; when a physical cell identity associated with the target TCI state is different from a physical cell identity of the first serving cell, a reference TCI state is used for determining the quasi co-location parameter of the first signal; and the reference TCI state is a TCI state configured for a reference CORESET, and the reference CORESET is a CORESET with a smallest index that is associated with a monitored search space and belongs to the target CORESET pool in a most recent time slot where the first node monitors one or more CORESETs belonging to the target CORESET pool.

According to one aspect of the present application, the quasi co-location parameter of the first signal depends on whether a physical cell identity associated with the target TCI state is the same as the physical cell identity of the first serving cell if and only if a first condition is satisfied; and the first condition comprises: a target recipient of the first signal is configured to monitor a first type of DCI in at least one search space set associated with a CORESET in the target CORESET pool.

According to one aspect of the present application, the quasi co-location parameter of the first signal depends on whether physical cell identities respectively associated with the first TCI state and the second TCI state are the same as the physical cell identity of the first serving cell; and when the physical cell identities respectively associated with the first TCI state and the second TCI state are both the same as the physical cell identity of the first serving cell, one of the first TCI state or the second TCI state is used for determining the quasi co-location parameter of the first signal.

According to one aspect of the present application, when a physical cell identity associated with only one of the first TCI state and the second TCI state is the same as a physical cell identity of the first serving cell, the one of the first TCI state and the second TCI state whose associated physical cell identity is the same as the physical cell identity of the first serving cell is used for determining the quasi co-location parameter of the first signal.

According to one aspect of the present application, the quasi co-location parameter of the first signal depends on whether a physical cell identity associated with a target TCI state is the same as a physical cell identity of the first serving cell, the target TCI state being one of the first TCI state or the second TCI state.

According to one aspect of the present application, when a physical cell identity associated with the target TCI state is a physical cell identity of the first serving cell, the target TCI state is used for determining the quasi co-location parameter of the first signal; when a physical cell identity associated with the target TCI state is different from a physical cell identity of the first serving cell, a reference TCI state is used for determining the quasi co-location parameter of the first signal; and the reference TCI state is one TCI state configured for a reference CORESET; and the reference CORESET is a CORESET with the smallest index that is associated with a monitored search space in a most recent slot where the first node monitors one or more CORESETs of the first serving cell.

The present application discloses a first node device used for wireless communication, comprising:
a first receiver for receiving a first information block set; receiving first signaling; and receiving a first signal;
wherein the first information block set indicates a first TCI state and a second TCI state; the first TCI state and the second TCI state are respectively applied to a first type of PDSCH and a second type of PDSCH in a first serving cell, or the first TCI state and the second TCI state are two TCI states configured for the first serving cell; and the first signaling is used for scheduling or triggering the first signal, and a quasi co-location parameter of the first signal depends on whether a physical cell identity associated with at least one of the first TCI state and the second TCI state is the same as a physical cell identity of the first serving cell.

The present application discloses a second node device used for wireless communication, comprising:
a second transmitter for sending a first information block set; sending first signaling; and sending a first signal;
wherein the first information block set indicates a first TCI state and a second TCI state; the first TCI state and the second TCI state are respectively applied to a first type of PDSCH and a second type of PDSCH in a first serving cell, or the first TCI state and the second TCI state are two TCI states configured for the first serving cell; and the first signaling is used for scheduling or triggering the first signal, and a quasi co-location parameter of the first signal depends on whether a physical cell identity associated with at least one of the first TCI state and the second TCI state is the same as a physical cell identity of the first serving cell.

As one embodiment, compared with the traditional solution, the present application has the following advantages:
- according to whether a physical cell identity associated with an indicated TCI state and a physical cell identity of a serving cell where it is located are the same, quasi co-location parameters of signals are appropriately selected;
- it is guaranteed that transmissions of common PDSCH come from the serving cell where it is located; and
- fast cross-cell beam switching is supported.

### Brief Description of the Drawings

Other features, objects and advantages of the present application will become more apparent by reading the detailed description of non-limiting embodiments with reference to the following drawings:
FIG. 1 shows a flowchart of a first information block set, first signaling and a first signal according to one embodiment of the present application;
FIG. 2 shows a schematic diagram of a network architecture according to one embodiment of the present application;
FIG. 3 shows a schematic diagram of an embodiment of a wireless protocol architecture of a user plane and a control plane according to one embodiment of the present application;
FIG. 4 shows a schematic diagram of a first communication device and a second communication device according to one embodiment of the present application;
FIG. 5 shows a flowchart of transmission according to one embodiment of the present application;
FIG. 6 shows a schematic diagram of a first information block set according to one embodiment of the present application;
FIG. 7 shows a schematic diagram of a first information block set according to another embodiment of the present application;
FIG. 8A-8B respectively show schematic diagrams of a quasi co-location parameter of a first signal according to one embodiment of the present application;
FIG. 9 shows a schematic diagram of a relationship between quasi co-location parameter of a first signal and a physical cell identity associated with a target TCI state according to one embodiment of the present application;
FIG. 10A-10B respectively show schematic diagrams of a relationship between a quasi co-location parameter of a first signal and a physical cell identity associated with a target TCI state according to another embodiment of the present application;
FIG. 11 shows a schematic diagram of a first condition according to one embodiment of the present application;
FIG. 12 shows a schematic diagram of a quasi co-location parameter of a first signal according to one embodiment of the present application;
FIG. 13 shows a schematic diagram of a quasi co-location parameter of a first signal according to one embodiment of the present application;
FIG. 14 shows a structural block diagram of a processing apparatus used in a first node device according to one embodiment of the present application; and
FIG. 15 shows a structural block diagram of a processing apparatus used in a second node device according to one embodiment of the present application.

### Detailed Description of Embodiments

The technical solution of the present application will be further described in detail below in conjunction with drawings. It should be noted that the embodiments and features in the embodiments in the present application can be arbitrarily combined with each other in case of no conflict.

### Embodiment 1

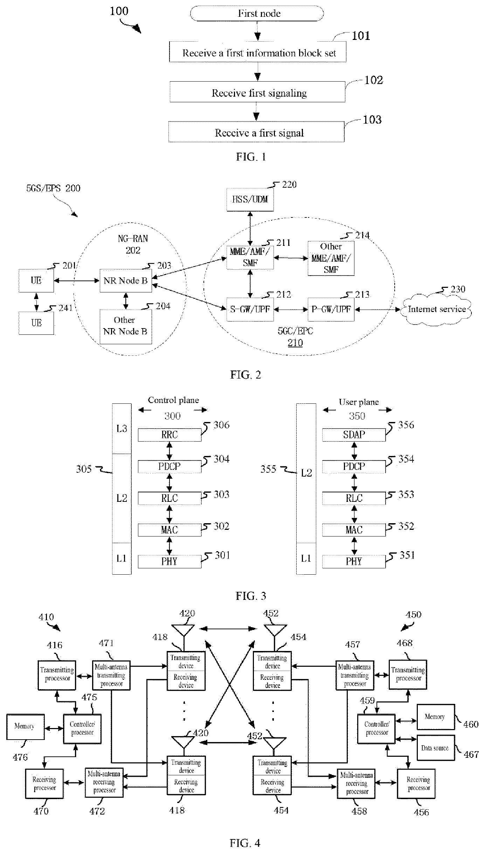

Embodiment 1 illustrates a flowchart of a first information block set, first signaling and a first signal according to one embodiment of the present application, as shown in FIG. 1. In 100 shown in FIG. 1, each block represents one step.

In Embodiment 1, the first node in the present application receives a first information block set in step 101; receives first signaling in step 102; and receives a first signal in step 103; wherein the first information block set indicates a first TCI state and a second TCI state; the first TCI state and the second TCI state are respectively applied to a first type of PDSCH and a second type of PDSCH in a first serving cell, or the first TCI state and the second TCI state are two TCI states configured for the first serving cell; and the first signaling is used for scheduling or triggering the first signal, and a quasi co-location parameter of the first signal depends on whether a physical cell identity associated with at least one of the first TCI state and the second TCI state is the same as a physical cell identity of the first serving cell.

As one embodiment, the first TCI state and the second TCI state are respectively applied to a first type of PDSCH and a second type of PDSCH in the first serving cell.

As one embodiment, the first TCI (transmission configuration indicator) state and the second TCI state are two TCI states configured for the first serving cell.

As one embodiment, the first TCI state and the second TCI state are two TCI states configured for the same BWP (BandWidth Part) of the first serving cell.

As one embodiment, the first TCI state and the second TCI state are two TCI states configured for a first BWP of the first serving cell.

As one embodiment, the first TCI state and the second TCI state are two TCI states configured for the same serving cell.

As one embodiment, the first TCI state and the second TCI state are two TCI states configured for the same BWP of the same serving cell.

As one embodiment, the first TCI state and the second TCI state are same.

As one embodiment, the first TCI state and the second TCI state are different.

As one embodiment, the first information block set is carried by RRC signaling.

As one embodiment, the first information block set is carried by MAC CE signaling.

As one embodiment, the first information block set is carried by physical layer signaling.

As one embodiment, a protocol layer to which signaling carrying the first information block set belongs is a protocol layer below RRC layer.

As one embodiment, the first information block set is carried by DCI (Downlink Control Information) signaling.

As one embodiment, the first information block set is carried by DCI signaling.

As one embodiment, the first information block set is carried by two DCI signaling.

As one embodiment, the first information block set is carried by a plurality of DCI signaling.

As one embodiment, the first information block set is carried by one or more DCI signaling.

Typically, the first signaling is one physical layer signaling.

Typically, the first signaling is one DCI signaling.

As one embodiment, a CORESET to which the first signaling belongs is associated with USS (UE-specific search space).

As one embodiment, a CORESET to which the first signaling belongs is associated with CSS (Common Search Space).

As one embodiment, the first signal is one of the first type of PDSCH or the second type of PDSCH.

As one embodiment, the first signal is a third type of PDSCH.

As one embodiment, the first signal is a PDSCH different from the first type of PDSCH and the second type of PDSCH.

As one embodiment, the first signaling is used for scheduling the first signal, and the first signal is transmitted on a PDSCH.

As one embodiment, the first signaling is used for scheduling the first signal, and the first signal is a PDSCH.

As one embodiment, the first signaling is DCI signaling that schedules the first signal, and the first signal is transmitted on a PDSCH.

As one embodiment, the first signaling is DCI signaling used for triggering the first signal, and the first signal is an aperiodic CSI-RS.

As one sub-embodiment of the above-mentioned embodiments, the first signaling comprises a CSI request field, and the CSI request field in the first signaling is used for triggering the first signal.

Typically, a time offset between the first signaling and the first signal is less than a first threshold.

As one embodiment, the first signal is a PDSCH, the first signaling is DCI signaling for scheduling the first signal, and the first threshold is timeDurationForQCL.

As one embodiment, the first signal is an aperiodic CSI-RS, and the first threshold is beamSwitchTiming.

As one embodiment, the first signal is a PDSCH, and a name of the first threshold comprises timeDurationForQCL.

As one embodiment, the first signal is an aperiodic CSI-RS, and a name of the first threshold comprises beamSwitchTiming.

As one embodiment, a specific definition of a CSI request field refers to Chapter 7.3 of 3GPP TS38.212.

As one embodiment, a specific definition of timeDurationForQCL refers to Chapter 5.1.5 of 3GPP TS38.213.

As one embodiment, a specific definition of beamSwitchTiming refers to Chapter 5.2.1.5.1 of 3GPP TS38.213.

As one embodiment, the first signaling is DCI signaling used for triggering the first signal, the first signal is an aperiodic CSI-RS, and a time offset between the last symbol of a PDCCH carrying the first signaling and the first symbol of the first signal is less than a first threshold.

As one embodiment, the first signaling is DCI signaling used for triggering the first signal, the first signal is an aperiodic CSI-RS, and "the time offset between the first signaling and the first signal" is a time offset between the last symbol of the PDCCH carrying the first signaling and the first symbol of the first signal.

As one embodiment, "the time offset between the first signaling and the first signal" is a time offset between the last symbol of the PDCCH carrying the first signaling and the first symbol of the first signal.

As one embodiment, "the time offset between the first signaling and the first signal" is a time offset between the last symbol occupied by the first signaling and the first symbol of the first signal.

As one embodiment, "the time offset between the first signaling and the first signal" is a time offset between the first symbol occupied by the first signaling and the first symbol of the first signal.

As one embodiment, "the time offset between the first signaling and the first signal" is a time offset between an end time of the first signaling and a start time of the first signal.

As one embodiment, "the time offset between the first signaling and the first signal" is a time offset between a start time of the first signaling and a start time of the first signal.

As one embodiment, "the last symbol" means: a latest symbol.

As one embodiment, "the first symbol" means: an earliest symbol.

As one embodiment, "the last symbol" means: a symbol with a largest index.

As one embodiment, "the first symbol" means: a symbol with a smallest index.

Typically, both the first type of PDSCH and the second type of PDSCH in the first serving cell belong to the same BWP in the first serving cell.

Typically, both the first type of PDSCH and the second type of PDSCH in the first serving cell belong to a first BWP in the first serving cell.

As one embodiment, a PDCCH scheduling the first type of PDSCH belongs to a first CORESET pool, and a PDCCH scheduling the second type of PDSCH belongs to a second CORESET pool; and the first CORESET pool comprises at least one CORESET, the second CORESET pool comprises at least one CORESET, and the first CORESET pool is different from the second CORESET pool.

As one embodiment, a PDCCH scheduling the first type of PDSCH and a PDCCH scheduling the second type of PDSCH belong to different CORESETs respectively.

As one embodiment, the first type of PDSCH and the second type of PDSCH are respectively used for transmitting two repetitions of the same Transport Block (TB).

As one sub-embodiment of the above-mentioned embodiments, the first type of PDSCH and the second type of PDSCH are respectively used for transmitting a first repetition and a second repetition of the same Transport Block (TB).

As one sub-embodiment of the above-mentioned embodiments, the first type of PDSCH and the second type of PDSCH are scrambled by the same RNTI.

As one embodiment, the first type of PDSCH and the second type of PDSCH are respectively used for two repetition transmissions of the same Transport Block (TB).

As one sub-embodiment of the above-mentioned embodiments, the first type of PDSCH and the second type of PDSCH are respectively used for a first repetition transmission and a second repetition transmission of the same transport block.

As one sub-embodiment of the above-mentioned embodiments, the first type of PDSCH and the second type of PDSCH are scrambled by the same RNTI.

As one embodiment, the first type of PDSCH and the second type of PDSCH are respectively two PDSCH repetitions scheduled by the same DCI.

As one sub-embodiment of the above-mentioned embodiments, the first type of PDSCH and the second type of PDSCH are respectively a first PDSCH repetition and a second PDSCH repetition scheduled by the same DCI.

As one sub-embodiment of the above-mentioned embodiments, the first type of PDSCH and the second type of PDSCH are scrambled by the same RNTI.

As one embodiment, the first type of PDSCH and the second type of PDSCH are respectively two PDSCHs scheduled by the same DCI.

As one sub-embodiment of the above-mentioned embodiments, the first type of PDSCH and the second type of PDSCH are respectively a first PDSCH and a second PDSCH scheduled by the same DCI.

As one sub-embodiment of the above-mentioned embodiments, the first type of PDSCH and the second type of PDSCH are scrambled by the same RNTI.

As one embodiment, the first type of PDSCH and the second type of PDSCH are respectively two PDSCH transmission occasions scheduled by the same DCI.

As one sub-embodiment of the above-mentioned embodiments, the first type of PDSCH and the second type of PDSCH are respectively a first PDSCH transmission occasion and a second PDSCH transmission occasion scheduled by the same DCI.

As one sub-embodiment of the above-mentioned embodiments, the first type of PDSCH and the second type of PDSCH are scrambled by the same RNTI.

As one embodiment, the first type of PDSCH and the second type of PDSCH belong to two PDSCH transmission occasions scheduled by the same DCI respectively.

As one sub-embodiment of the above-mentioned embodiments, the first type of PDSCH and the second type of PDSCH belong to a first PDSCH transmission occasion and a second PDSCH transmission occasion scheduled by the same DCI respectively.

As one sub-embodiment of the above-mentioned embodiments, the first type of PDSCH and the second type of PDSCH are scrambled by the same RNTI.

As one embodiment, the first type of PDSCH and the second type of PDSCH belong to the same PDSCH transmission occasion scheduled by the same DCI.

As one sub-embodiment of the above-mentioned embodiments, the first type of PDSCH and the second type of PDSCH are scrambled by the same RNTI.

As one sub-embodiment of the above-mentioned embodiments, the first type of PDSCH and the second type of PDSCH carry the same transport block.

As one sub-embodiment of the above-mentioned embodiments, the first type of PDSCH and the second type of PDSCH carry different transport blocks.

As one sub-embodiment of the above-mentioned embodiments, the first type of PDSCH and the second type of PDSCH carry different layers of the same transport block.

As one sub-embodiment of the above-mentioned embodiments, the first type of PDSCH and the second type of PDSCH are orthogonal in time domain.

As one sub-embodiment of the above-mentioned embodiments, the first type of PDSCH and the second type of PDSCH are orthogonal in frequency domain.

As one sub-embodiment of the above-mentioned embodiments, the first type of PDSCH and the second type of PDSCH are spatially multiplexed.

As one sub-embodiment of the above-mentioned embodiments, time-frequency resources occupied by the first type of PDSCH and the second type of PDSCH are overlapping.

As one sub-embodiment of the above-mentioned embodiments, the first type of PDSCH and the second type of PDSCH are spatially multiplexed.

As one embodiment, the first type of PDSCH and the second type of PDSCH are time-division multiplexed, frequency-division multiplexed or spatially multiplexed.

As one embodiment, the first type of PDSCH and the second type of PDSCH are respectively configured by two RRC (Radio Resource Control) IEs (Information Elements) whose names comprise PDSCH-Config.

As one embodiment, the first type of PDSCH and the second type of PDSCH correspond to a first TCI set and a second TCI set respectively, the first TCI set comprises at least one TCI state, and the second TCI set comprises at least one TCI state.

As one embodiment, starting from a first time, the first TCI state is applied to a first type of PDSCH in the first serving cell; and starting from a second time, the second TCI state is applied to a second type of PDSCH in the first serving cell.

As one embodiment, starting from a third time, the first TCI state is applied to a first type of PDSCH and a second type of PDSCH in the first serving cell.

As one embodiment, a DMRS of the first type of PDSCH in the first serving cell to which the first TCI state is applied is associated with a physical cell identity (PCI) associated with the first TCI state, and a DMRS of the second type of PDSCH in the first serving cell to which the second TCI state is applied is associated with a physical cell identity associated with the second TCI state.

Typically, when physical cell identities associated with the first TCI state and the second TCI state respectively are both different from a physical cell identity of the first serving cell, physical cell identities associated with the first TCI state and the second TCI state are same.

As one embodiment, the physical cell identity is PhysCellId.

As one embodiment, the physical cell identity is SCellIndex.

As one embodiment, the physical cell identity is CellIdentity.

As one embodiment, the first TCI state is used for determining a quasi co-location parameter of a DMRS (DeModulation Reference Signals) port of the first type of PDSCH in the first serving cell; and the second TCI state is used for determining a quasi co-location parameter of a DMRS port of the second type of PDSCH in the first serving cell.

As one embodiment, the first TCI state is used for indicating a quasi co-location parameter of a DMRS (DeModulation Reference Signals) port of the first type of PDSCH in the first serving cell; and the second TCI state is used for indicating a quasi co-location parameter of a DMRS port of the second type of PDSCH in the first serving cell.

As one embodiment, the first TCI state indicates a quasi co-location relationship between at least one reference signal resource and DMRS ports of the first type of PDSCH in the first serving cell, and the second TCI state indicates a quasi co-location relationship between at least one reference signal resource and DMRS ports of the second type of PDSCH in the first serving cell.

As one embodiment, DMRS ports of the first type of PDSCH in the first serving cell are quasi co-located with at least one reference signal resource indicated by the first TCI state; and DMRS ports of the second type of PDSCH in the first serving cell are quasi co-located with at least one reference signal resource in the second TCI state.

As one embodiment, a quasi co-location parameter of the first signal comprise a quasi co-location parameter for receiving the first signal.

As one embodiment, a quasi co-location parameter of the first signal comprise a quasi co-location parameter for receiving the first signal and a quasi co-location parameter for sending the first signal.

As one embodiment, a quasi co-location parameter of the first signal depends on whether a physical cell identity associated with only one of the first TCI state and the second TCI state is the same as a physical cell identity of the first serving cell.

As one embodiment, the quasi co-location parameter of the first signal depends on whether a physical cell identity associated with a target TCI state is the same as a physical cell identity of the first serving cell, the target TCI state being one of the first TCI state or the second TCI state.

As one embodiment, a quasi co-location parameter of the first signal depends on whether physical cell identities respectively associated with the first TCI state and the second TCI state are the same as a physical cell identity of the first serving cell.

Typically, when configuration information of the first TCI state comprises an additionalPCI-r17 field, the first TCI state is associated with a physical cell identity different from a physical cell identity of the first serving cell; and when configuration information of the second TCI state comprises an additionalPCI-r17 field, the second TCI state is associated with a physical cell identity different from a physical cell identity of the first serving cell.

Typically, when configuration information of the first TCI state does not comprise an additionalPCI-r17 field, the first TCI state is associated with a physical cell identity of the first serving cell; and when configuration information of the second TCI state does not comprise an additionalPCI-r17 field, the second TCI state is associated with a physical cell identity of the first serving cell.

Typically, when configuration information of the first TCI state comprises a field whose name comprises additionalPCI, the first TCI state is associated with a physical cell identity different from a physical cell identity of the first serving cell; and when configuration information of the second TCI state comprises a field whose name comprises additionalPCI, the second TCI state is associated with a physical cell identity different from a physical cell identity of the first serving cell.

Typically, when configuration information of the first TCI state does not comprise a field whose name comprises additionalPCI, the first TCI state is associated with a physical cell identity of the first serving cell; and when configuration information of the second TCI state does not comprise a field whose name comprises additionalPCI, the second TCI state is associated with a physical cell identity of the first serving cell.

As one embodiment, the meaning of "a given TCI state is associated with a given physical cell identity" includes: a reference signal resource indicated by the given TCI state is associated with a given physical cell identity.

As one embodiment, the meaning of "a given TCI state is associated with a given physical cell identity" includes: a given physical cell identity is used for generating a reference signal resource indicated by the given TCI state.

As one embodiment, the meaning of "a given TCI state is associated with a given physical cell identity" includes: a reference signal resource indicated by the given TCI state is associated with a cell identified by a given physical cell identity.

As one embodiment, the meaning of "a given TCI state is associated with a given physical cell identity" includes: a reference signal resource indicated by the given TCI state belongs to or is configured for a cell identified by a given physical cell identity.

As one embodiment, the meaning of "a given TCI state is associated with a given physical cell identity" includes: a reference signal resource indicated by the given TCI state is sent by a cell identified by a given physical cell identity.

As one embodiment, the meaning of "a given TCI state is associated with a given physical cell identity" includes: a reference signal resource indicated by the given TCI state is quasi co-located with a reference signal resource in a cell identified by a given physical cell identity.

As one embodiment, the meaning of "a given TCI state is associated with a given physical cell identity" includes: a reference signal resource indicated by the given TCI state is quasi co-located with SS/PBCH block resource in a cell identified by a given physical cell identity.

As one embodiment, the meaning of "a given TCI state is associated with a given physical cell identity" includes: the same quasi co-location parameter is used for receiving a reference signal resource indicated by the given TCI state and a reference signal resource in a cell identified by a given physical cell identity.

As one embodiment, the meaning of "a given TCI state is associated with a given physical cell identity" includes: the same quasi co-location parameter is used for receiving a reference signal resource indicated by the given TCI state and SS/PBCH block resource in a cell identified by a given physical cell identity.

As one embodiment, the given TCI state is the first TCI state, and the given physical cell identity is a physical cell identity of the first serving cell or a physical cell identity different from a physical cell identity of the first serving cell.

As one embodiment, the given TCI state is the second TCI state, and the given physical cell identity is a physical cell identity of the first serving cell or a physical cell identity different from a physical cell identity of the first serving cell.

As one embodiment, the given TCI state is the target TCI state, and the given physical cell identity is a physical cell identity of the first serving cell or a physical cell identity different from a physical cell identity of the first serving cell.

As one embodiment, one TCI state indicates a quasi co-location relationship.

As one embodiment, one TCI state indicates one or more reference signal resources.

As one embodiment, one TCI state indicates at least one reference signal resource.

As one embodiment, any reference signal resource indicated by one TCI state is one of: SRS (Sounding Reference Signal) resource, CSI-RS (Channel State Information Reference Signal) resource, or SS/PBCH (Synchronization Signal/Physical Broadcast Channel) block resource.

As one embodiment, any reference signal resource indicated by one TCI state is CSI-RS resource or SS/PBCH block resource.

As one embodiment, one TCI state indicates at least one reference signal resource and a quasi co-location (QCL) parameter corresponding to each reference signal resource.

As one embodiment, one TCI state indicates at least one reference signal resource and a type of a quasi co-location parameter corresponding to each reference signal resource.

As one embodiment, the type of the quasi co-location parameter includes TypeA, TypeB, TypeC, and TypeD.

As one embodiment, a quasi co-location parameter of TypeA includes Doppler shift, Doppler spread, average delay, and delay spread.

As one embodiment, a quasi co-location parameter of TypeB includes Doppler shift and Doppler spread.

As one embodiment, a quasi co-location parameter of TypeC includes Doppler shift and average delay.

As one embodiment, a quasi co-location parameter of TypeD includes a Spatial Rx parameter.

As one embodiment, specific definitions of the TypeA, the TypeB, the TypeC and the TypeD refer to Chapter 5.1.5 of 3GPP TS38.214.

As one embodiment, the quasi co-location parameter includes one or more of: delay spread, Doppler spread, Doppler shift, average delay, or Spatial Rx parameter.

As one embodiment, the quasi co-location parameter includes Doppler shift and Doppler spread.

As one embodiment, the quasi co-location parameter includes Doppler shift and average delay.

As one embodiment, the quasi co-location parameter includes a Spatial Rx parameter.

As one embodiment, the quasi co-location parameter includes at least one of a spatial transmission parameter or a Spatial Rx parameter.

As one embodiment, the quasi co-location parameter includes a spatial domain receive filter.

As one embodiment, the quasi co-location parameter includes a spatial domain filter.

As one embodiment, the quasi co-location parameter includes at least one of a spatial domain transmit filter or a spatial domain receive filter.

### Embodiment 2

Embodiment 2 illustrates a schematic diagram of a network architecture according to one embodiment of the present application, as shown in FIG. 2.

FIG. 2 illustrates a network architecture 200 of LTE (Long-Term Evolution), LTE-A (Long-Term Evolution Advanced) and future 5G systems. The network architecture 200 of LTE, LTE-A and future 5G systems is called an EPS (Evolution Packet System) 200. The 5G NR or LTE network architecture 200 may be referred to as a 5GS (5G System)/EPS (Evolved Packet System) 200 or some other suitable terms. The 5GS/EPS 200 may comprise one or more pieces of UE (User Equipment) 201, a piece of UE241 that performs sidelink communication with the UE201, an NG-RAN (Next Generation Radio Access Network) 202, a 5GC (5G CoreNetwork)/EPC (Evolved Packet Core) 210, an HSS (Home Subscriber Server)/UDM (Unified Data Management) 220, and an Internet service 230. The 5GS/EPS200 may be interconnected with other access networks, but these entities/interfaces are not shown for simplicity. As shown in FIG. 2, the 5GS/EPS200 provides packet switching services, however, those skilled in the art will readily understand that various concepts presented throughout the present application can be extended to networks providing circuit switching services. The NG-RAN 202 comprises NR (New Radio) Node B (gNB) 203 and other gNB204. The gNB203 provides user and control plane protocol termination toward the UE201. The gNB203 may be connected to the other gNB204 via an Xn interface (for example, backhaul). The gNB203 may also be referred to as a base station, a base transceiver station, a radio base station, a radio transceiver, a transceiver function, a basic service set (BSS), an extended service set (ESS), a TRP (transmit receive point), or some other suitable terms. The gNB203 provides the UE201 with access points to the 5GC/EPC210. Examples of the UE201 comprise cellular telephones, smart phones, session initiation protocol (SIP) telephones, laptops, personal digital assistants (PDAs), satellite radios, global positioning systems, multimedia devices, video devices, digital audio players (e.g., MP3 players), cameras, game consoles, drones, aircrafts, narrowband physical network devices, machine type communication devices, land vehicles, cars, wearable devices, or any other similar functional devices. Those skilled in the art may also refer to the UE201 as a mobile station, a subscriber station, a mobile unit, a subscriber unit, a wireless unit, a remote unit, a mobile apparatus, a wireless apparatus, a wireless communication apparatus, a remote apparatus, a mobile subscriber station, an access terminal, a mobile terminal, a wireless terminal, a remote terminal, a handset, a user agent, a mobile client, a client, or some other suitable terms. The gNB203 is connected to the 5GC/EPC210 through an S1/NG interface. The 5GC/EPC210 comprises MME (Mobility Management Entity)/AMF (Authentication Management Field)/SMF (Session Management Function) 211, other MME/AMF/SMF214, S-GW (Service Gateway)/UPF (User Plane Function) 212, and P-GW (Packet Date Network Gateway)/UPF213. The MME/AMF/SMF211 is a control node that processes signaling between the UE201 and the 5GC/EPC210. Generally speaking, the MME/AMF/SMF211 provides bearer and connection management. All user IP (Internet Protocol) packets are transmitted through the S-GW/UPF212, and the S-GW/UPF212 itself is connected to the P-GW/UPF213. The P-GW provides UE IP address assignment and other functions. The P-GW/UPF213 is connected to the Internet services 230. The Internet services 230 comprise operator's corresponding Internet protocol services, which may specifically comprise Internet, intranets, IMS (IP Multimedia Subsystem) and packet switching services.

As one embodiment, the first node in the present application comprises the UE201.

As one embodiment, the first node in the present application comprises the UE241.

As one embodiment, the second node in the present application comprises the gNB203.

### Embodiment 3

Embodiment 3 illustrates a schematic diagram of an embodiment of a wireless protocol architecture of a user plane and a control plane according to one embodiment of the present application, as shown in FIG. 3.

Embodiment 3 shows a schematic diagram of an embodiment of a wireless protocol architecture of a user plane and a control plane according to the present application, as shown in FIG. 3. FIG. 3 is a schematic diagram illustrating an embodiment of a radio protocol architecture for a user plane 350 and a control plane 300, and FIG. 3 shows a radio protocol architecture for the control plane 300 between a first communication node device (UE, gNB or RSU in V2X) and a second communication node device (gNB, UE or RSU in V2X) or between two pieces of UE: layer 1, layer 2 and layer 3. Layer 1 (L1 layer) is the lowest layer and implements various PHY (physical layer) signal processing functions. The L1 layer will be referred to herein as PHY301. Layer 2 (L2 layer) 305 is above PHY301 and is responsible for a link between the first communication node device and the second communication node device, or between two pieces of UE. The L2 layer 305 comprises an MAC (Medium Access Control) sub-layer 302, an RLC (Radio Link Control) sub-layer 303, and a PDCP (Packet Data Convergence Protocol) sub-layer 304, which terminate at the second communication node device. The PDCP sublayer 304 provides multiplexing between different radio bearers and logical channels. The PDCP sub-layer 304 also provides security by encrypting data packets, and provides cross-zone mobility support for the first communication node device between the second communication node devices. The RLC sublayer 303 provides segmentation and reassembly of upper layer data packets, retransmission of lost data packets, and reordering of data packets to compensate for disordered reception caused by HARQ. The MAC sublayer 302 provides multiplexing between logical channels and transport channels. The MAC sub-layer 302 is also responsible for assigning various radio resources (for example, resource blocks) in a cell among the first communication node devices. The MAC sublayer 302 is also responsible for HARQ operations. An RRC (Radio Resource Control) sub-layer 306 in layer 3 (L3 layer) in the control plane 300 is responsible for obtaining radio resources (i.e., radio bearers) and configuring a lower layer using an RRC signaling between the second communication node device and the first communication node device. The radio protocol architecture of the user plane 350 includes Layer 1 (L1 layer) and Layer 2 (L2 layer). Regarding the radio protocol architecture used between the first communication node device and the second communication node device in the user plane 350, the physical layer 351, a PDCP sublayer 354 in the L2 layer 355, an RLC sublayer 353 in the L2 layer 355 and a MAC sublayer 352 in the L2 layer 355 are generally the same as the corresponding layers and sublayers in the control plane 300, but the PDCP sublayer 354 also provides header compression for upper layer data packets to reduce radio transmission overhead. The L2 layer 355 in the user plane 350 also comprises an SDAP (Service Data Adaptation Protocol) sub-layer 356, and the SDAP sub-layer 356 is responsible for mapping between QoS streams and data radio bearers (DRBs) to support service diversity. Although not shown, the first communication node device may have several upper layers above the L2 layer 355, including a network layer (for example, IP layer) terminated at P-GW on the network side and an application layer terminated at the other end of the connection (for example, a remote UE, server, etc.).

As one embodiment, the wireless protocol architecture in FIG. 3 is applicable to the first node in the present application.

As one embodiment, the wireless protocol architecture in FIG. 3 is applicable to the second node in the present application.

As one embodiment, the first information block set is generated in the RRC sublayer 306.

As one embodiment, the first information block set is generated in the MAC sublayer 302.

As one embodiment, the first information block set is generated in the MAC sublayer 352.

As one embodiment, the first information block set is generated in the PHY 301 or the PHY 351.

As one embodiment, the first signaling is generated in the PHY 301 or the PHY 351.

As one embodiment, the first signal is generated in the PHY 301 or the PHY 351.

As one embodiment, the third signal is generated in the PHY 301 or the PHY 351.

As one embodiment, the second signal is generated in the PHY 301 or the PHY 351.

As one embodiment, the first sub-signal and the second sub-signal are generated in the PHY 301 or the PHY 351.

### Embodiment 4

Embodiment 4 illustrates a schematic diagram of a first communication device and a second communication device according to one embodiment of the present application, as shown in FIG. 4. FIG. 4 is a block diagram of a first communication device 410 and a second communication device 450 communicating with each other in an access network.

The first communication device 410 comprises a controller/processor 475, a memory 476, a receiving processor 470, a transmitting processor 416, a multi-antenna receiving processor 472, a multi-antenna transmitting processor 471, a transmitting device/receiving device 418, and an antenna 420.

The second communication device 450 comprises a controller/processor 459, a memory 460, a data source 467, a transmitting processor 468, a receiving processor 456, a multi-antenna transmitting processor 457, a multi-antenna receiving processor 458, a transmitting device/receiving device 454, and an antenna 452.

In transmission from the first communication device 410 to the second communication device 450, at the first communication device 410, upper layer data packets from a core network are provided to the controller/processor 475. The controller/processor 475 implements the functionality of the L2 layer. In a DL, the controller/processor 475 provides header compression, encryption, packet segmentation and reordering, multiplexing between logic and transmission channels, and radio resource allocation for the second communication device 450 based on various priority metrics. The controller/processor 475 is also responsible for HARQ operations, retransmission of lost packets, and signaling to the second communication device 450. The transmitting processor 416 and the multi-antenna transmitting processor 471 implement various signal processing functions for the L1 layer (that is, the physical layer). The transmitting processor 416 implements encoding and interleaving to facilitate forward error correction (FEC) at the second communication device 450, and constellation mapping based on various modulation schemes (e.g., binary phase shift keying (BPSK), quadrature phase shift keying (QPSK), M phase shift keying (M-PSK), M quadrature amplitude modulation (M-QAM)). The multi-antenna transmitting processor 471 performs digital spatial precoding on encoded and modulated symbols, comprising codebook-based precoding and non-codebook-based precoding, and beamforming processing to generate one or more parallel streams. The transmitting processor 416 then maps each parallel stream to a subcarrier, multiplexes the modulated symbols with a reference signal (e.g., pilot) in a time domain and/or a frequency domain, and then uses a Fast Fourier Inverse Transform (IFFT) to generate a physical channel for carrying a time domain multi-carrier symbol stream. The multi-antenna transmitting processor 471 then performs a simulated precoding/beamforming operation on the time domain multi-carrier symbol stream. Each transmitting device 418 converts the baseband multi-carrier symbol stream provided by the multi-antenna transmitting processor 471 into a radio frequency stream, and then provides it to different antennas 420.

In transmission from the first communication device 410 to the second communication device 450, at the second communication device 450, each receiving device 454 receives a signal through its corresponding antenna 452. Each receiving device 454 recovers information modulated to the radio frequency carrier and converts the radio frequency stream into a baseband multi-carrier symbol stream to provide it to the receiving processor 456. The receiving processor 456 and the multi-antenna receiving processor 458 implement various signal processing functions of the L1 layer. The multi-antenna receiving processor 458 performs receiving simulated precoding/beamforming operations on the baseband multi-carrier symbol stream from the receiving device 454. The receiving processor 456 uses Fast Fourier Transform (FFT) to convert the baseband multi-carrier symbol stream from the time domain to the frequency domain after the receiving simulated precoding/beamforming operations. In a frequency domain, a physical layer data signal and a reference signal are demultiplexed by the receiving processor 456, wherein the reference signal will be used for channel estimation, and the data signal recovers any parallel stream destined for the second communication device 450 after being detected by multiple antennas in the multi-antenna receiving processor 458. Symbols on each parallel stream are demodulated and recovered in the receiving processor 456 and generate a soft decision. Later, the receiving processor 456 decodes and de-interleaves the soft decision to recover upper layer data and control signals transmitted by the first communication device 410 on the physical channel. The upper layer data and control signals are then provided to the controller/processor 459. The controller/processor 459 implements the functions of the L2 layer. The controller/processor 459 may be associated with a memory 460 storing program codes and data. The memory 460 may be referred to as a computer readable medium. In a DL, the controller/processor 459 provides demultiplexing between transmission and logical channels, packet reassembly, decryption, header decompression, and control signal processing to recover upper-layer data packets from the core network. The upper layer data packets are then provided to all protocol layers above the L2 layer. Various control signals may also be provided to L3 for L3 processing. The controller/processor 459 is also responsible for error detection using acknowledge (ACK) and/or negative acknowledge (NACK) protocols to support HARQ operation.

In transmission from the second communication device 450 to the first communication device 410, at the second communication device 450, the data source 467 is used for providing upper-layer data packets to the controller/processor 459. The data source 467 represents all protocol layers above the L2 layer. Similar to the sending function at the first communication device 410 described in the DL, the controller/processor 459 implements header compression, encryption, packet segmentation and reordering, and multiplexing between logic and transmission channels based on wireless resource allocation of the first communication device 410, to implement L2 layer functions for a user plane and a control plane. The controller/processor 459 is also responsible for HARQ operations, retransmission of lost packets, and signaling to the first communication device 410. The transmitting processor 468 performs modulation mapping and channel encoding processing, the multi-antenna transmitting processor 457 performs digital multi-antenna spatial precoding, comprising codebook-based precoding and non-codebook-based precoding, and beamforming processing, and later the transmitting processor 468 modulates a generated parallel stream into a multi-carrier/single-carrier symbol stream, and then provides it to different antennas 452 via the transmitting device 454 after simulated precoding/beamforming operation in the multi-antenna transmitting processor 457. Each transmitter 454 first converts baseband symbol streams provided from the multi-antenna transmitting processor 457 into radio frequency symbol streams, and then supplies the radio frequency symbol streams to the antenna 452.

In transmission from the second communication device 450 to the first communication device 410, the function at the first communication device 410 is similar to a reception function at the second communication device 450 described in transmission from the first communication device 410 to the second communication device 450. Each receiving device 418 receives the radio frequency signals through its corresponding antenna 420, converts the received radio frequency signals into baseband signals, and provides the baseband signals to the multi-antenna receiving processor 472 and the receiving processor 470. The receiving processor 470 and the multi-antenna receiving processor 472 jointly implement the function of L1. The controller/processor 475 implements the functions of the L2 layer. The controller/processor 475 may be associated with a memory 476 storing program codes and data. The memory 476 may be referred to as a computer readable medium. The controller/processor 475 provides demultiplexing between transmission and logical channels, packet reassembly, decryption, header decompression, and control signal processing to recover upper-layer data packets from the second communication device 450. The upper layer data packets from the controller/processor 475 may be provided to the core network. The controller/processor 475 is also responsible for error detection using ACK and/or NACK protocols to support HARQ operations.

As one embodiment, the second communication device 450 comprises: at least one processor and at least one memory, and the at least one memory comprises computer program codes; the at least one memory and the computer program codes are configured to be used together with the at least one processor. The second communication device 450 at least: receives a first information block set; receives first signaling; and receives a first signal; wherein the first information block set indicates a first TCI state and a second TCI state; the first TCI state and the second TCI state are respectively applied to a first type of PDSCH and a second type of PDSCH in a first serving cell, or the first TCI state and the second TCI state are two TCI states configured for the first serving cell; and the first signaling is used for scheduling or triggering the first signal, and a quasi co-location parameter of the first signal depends on whether a physical cell identity associated with at least one of the first TCI state and the second TCI state is the same as a physical cell identity of the first serving cell.

As one embodiment, the second communication device 450 comprises: a memory storing a computer readable instruction program that generates an action when executed by at least one processor, the action comprising: receiving a first information block set; receiving first signaling; and receiving a first signal; wherein the first information block set indicates a first TCI state and a second TCI state; the first TCI state and the second TCI state are respectively applied to a first type of PDSCH and a second type of PDSCH in a first serving cell, or the first TCI state and the second TCI state are two TCI states configured for the first serving cell; and the first signaling is used for scheduling or triggering the first signal, and a quasi co-location parameter of the first signal depends on whether a physical cell identity associated with at least one of the first TCI state and the second TCI state is the same as a physical cell identity of the first serving cell.

As one embodiment, the first communication device 410 comprises: at least one processor and at least one memory, and the at least one memory comprises computer program codes; the at least one memory and the computer program codes are configured to be used together with the at least one processor. The first communication device 410 at least: sends a first information block set; sends first signaling; and sends a first signal; wherein the first information block set indicates a first TCI state and a second TCI state; the first TCI state and the second TCI state are respectively applied to a first type of PDSCH and a second type of PDSCH in a first serving cell, or the first TCI state and the second TCI state are two TCI states configured for the first serving cell; and the first signaling is used for scheduling or triggering the first signal, and a quasi co-location parameter of the first signal depends on whether a physical cell identity associated with at least one of the first TCI state and the second TCI state is the same as a physical cell identity of the first serving cell.

As one embodiment, the first communication device 410 comprises: a memory storing a computer readable instruction program that generates an action when executed by at least one processor, the action comprising: sending a first information block set; sending first signaling; and sending a first signal; wherein the first information block set indicates a first TCI state and a second TCI state; the first TCI state and the second TCI state are respectively applied to a first type of PDSCH and a second type of PDSCH in a first serving cell, or the first TCI state and the second TCI state are two TCI states configured for the first serving cell; and the first signaling is used for scheduling or triggering the first signal, and a quasi co-location parameter of the first signal depends on whether a physical cell identity associated with at least one of the first TCI state and the second TCI state is the same as a physical cell identity of the first serving cell.

As one embodiment, the first node in the present application comprises the second communication device 450.

As one embodiment, the second node in the present application comprises the first communication device 410.

As one embodiment, at least one of {the antenna 452, the receiving device 454, the receiving processor 456, the multi-antenna receiving processor 458, the controller/processor 459, the memory 460, the data source 467} is used for receiving the first information block set in the present application; at least one of {the antenna 420, the transmitting device 418, the transmitting processor 416, the multi-antenna transmitting processor 471, the controller/processor 475, the memory 476} is used for sending the first information block set in the present application.

As one embodiment, at least one of {the antenna 452, the receiving device 454, the receiving processor 456, the multi-antenna receiving processor 458, the controller/processor 459, the memory 460, the data source 467} is used for receiving the first signaling in the present application; at least one of {the antenna 420, the transmitting device 418, the transmitting processor 416, the multi-antenna transmitting processor 471, the controller/processor 475, the memory 476} is used for sending the first signaling in the present application.

As one embodiment, at least one of {the antenna 452, the receiving device 454, the receiving processor 456, the multi-antenna receiving processor 458, the controller/processor 459, the memory 460, the data source 467} is used for receiving the first signal in the present application; and at least one of {the antenna 420, the transmitting device 418, the transmitting processor 416, the multi-antenna transmitting processor 471, the controller/processor 475, the memory 476} is used for sending the first signal in the present application.

As one embodiment, at least one of {the antenna 452, the transmitting device 454, the transmitting processor 468, the multi-antenna transmitting processor 457, the controller/processor 459, the memory 460} is used for sending the third signal in the present application; and at least one of {the antenna 420, the receiving device 418, the receiving processor 470, the multi-antenna receiving processor 472, the controller/processor 475, the memory 476} is used for receiving the third signal in the present application.

As one embodiment, at least one of {the antenna 452, the transmitting device 454, the transmitting processor 468, the multi-antenna transmitting processor 457, the controller/processor 459, the memory 460} is used for sending the second signal in the present application; and at least one of {the antenna 420, the receiving device 418, the receiving processor 470, the multi-antenna receiving processor 472, the controller/processor 475, the memory 476} is used for receiving the second signal in the present application.

As one embodiment, at least one of {the antenna 452, the transmitting device 454, the transmitting processor 468, the multi-antenna transmitting processor 457, the controller/processor 459, the memory 460} is used for sending the first sub-signal and the second sub-signal in the present application; and at least one of {the antenna 420, the receiving device 418, the receiving processor 470, the multi-antenna receiving processor 472, the controller/processor 475, the memory 476} is used for receiving the first sub-signal and the second sub-signal in the present application.

### Embodiment 5

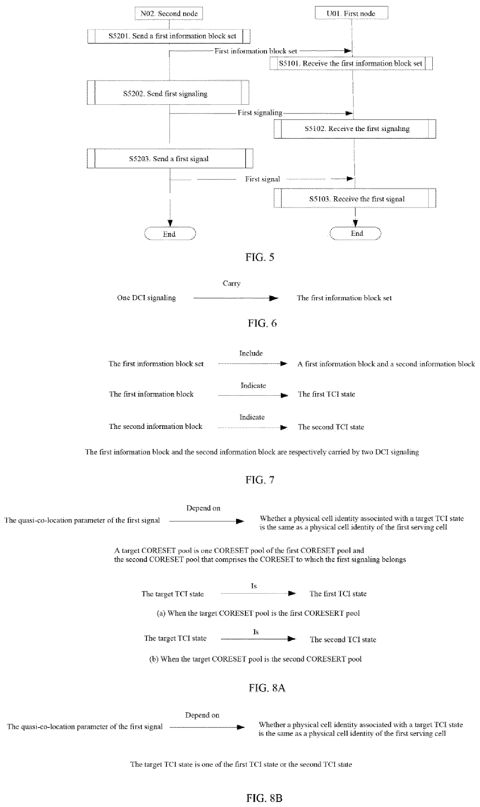

Embodiment 5 illustrates a flowchart of wireless transmission according to one embodiment of the present application, as shown in FIG. 5. In FIG. 5, a first node U01 and a second node N02 are respectively two communication nodes transmitted through an air interface.
For **the first node U01,** in step S5101, a first information block set is received; in step S5102, first signaling is received; in step S5103, a first signal is received;
for **the second node N02,** in step S5201, a first information block set is sent; in step S5202, first signaling is sent; in step S5203, a first signal is sent;
in Embodiment 5, the first information block set indicates a first TCI state and a second TCI state; the first TCI state and the second TCI state are respectively applied to a first type of PDSCH and a second type of PDSCH in a first serving cell, or the first TCI state and the second TCI state are two TCI states configured for the first serving cell; and the first signaling is used for scheduling or triggering the first signal, and a quasi co-location parameter of the first signal depends on whether a physical cell identity associated with at least one of the first TCI state and the second TCI state is the same as a physical cell identity of the first serving cell.

As one embodiment, the meaning of the sentence "a given TCI state is used for determining a quasi co-location parameter of a given signal" includes: a given signal is a PDSCH, and DMRS ports of the given signal are quasi co-located with at least one reference signal resource indicated by the given TCI state.

As one embodiment, the meaning of the sentence "a given TCI state is used for determining a quasi co-location parameter of a given signal" includes: the same quasi co-location parameter is used for receiving the given signal and at least one reference signal resource indicated by the given TCI state.

As one embodiment, the meaning of the sentence "same quasi co-location parameter is used for receiving the given signal and at least one reference signal resource indicated by the given TCI state" includes: the first node assumes that the same quasi co-location parameter is used for receiving the given signal and at least one reference signal resource indicated by the given TCI state.

As one embodiment, the meaning of the sentence "a given TCI state is used for determining a quasi co-location parameter of a given signal" includes: the same quasi co-location parameter is used for sending the given signal and at least one reference signal resource indicated by the given TCI state.

As one embodiment, the meaning of the sentence "same quasi co-location parameter is used for sending the given signal and at least one reference signal resource indicated by the given TCI state" includes: the first node assumes that the same quasi co-location parameter is used for sending the given signal and at least one reference signal resource indicated by the given TCI state.

As one embodiment, the meaning of the sentence "a given TCI state is used for determining a quasi co-location parameter of a given signal" includes: the given TCI state is used for determining quasi co-location parameters of antenna ports of the given signal.

As one embodiment, the meaning of the sentence "a given TCI state is used for determining a quasi co-location parameter of a given signal" includes: the given signal is a PDSCH, and the given TCI state is used for determining quasi co-location parameters of DMRS (DeModulation Reference Signals) ports of the given signal.

As one embodiment, the meaning of the sentence "a given TCI state is used for determining a quasi co-location parameter of a given signal" includes: the given TCI state indicates a quasi co-location relationship between at least one reference signal resource and an antenna port of the given signal.

As one embodiment, the meaning of the sentence "a given TCI state is used for determining a quasi co-location parameter of a given signal" includes: the given signal is a PDSCH, and the given TCI state indicates a quasi co-location relationship between at least one reference signal resource and a DMRS port of the given signal.

As one embodiment, the meaning of the sentence "a given TCI state is used for determining a quasi co-location parameter of a given signal" includes: an antenna port of the given signal is quasi co-located with at least one reference signal resource indicated by the given TCI state.

As one embodiment, the meaning of the sentence "an antenna port of the given signal is quasi co-located with at least one reference signal resource indicated by the given TCI state" includes: the first node assumes that an antenna port of the given signal is quasi co-located with at least one reference signal resource indicated by the given TCI state.

As one embodiment, the meaning of the sentence "a DMRS port of the given signal is quasi co-located with at least one reference signal resource indicated by the given TCI state" includes: the first node assumes that a DMRS port of the given signal is quasi co-located with at least one reference signal resource indicated by the given TCI state.

As one embodiment, the meaning of the sentence "a given TCI state is used for determining a quasi co-location parameter of a given signal" includes: the same quasi co-location parameter is used for receiving the given signal and used for receiving or sending at least one reference signal resource indicated by the given TCI state.

As one embodiment, the meaning of the sentence "same quasi co-location parameter is used for receiving the given signal and used for receiving or sending at least one reference signal resource indicated by the given TCI state" includes: the first node assumes that the same quasi co-location parameter is used for receiving the given signal and used for receiving or sending at least one reference signal resource indicated by the given TCI state.

As one embodiment, the meaning of the sentence "a given TCI state is used for determining a quasi co-location parameter of a given signal" includes: the same quasi co-location parameter is used for receiving or sending the given signal and used for receiving or sending at least one reference signal resource indicated by the given TCI state.

As one embodiment, the meaning of the sentence "same quasi co-location parameter is used for receiving or sending the given signal and used for receiving or sending at least one reference signal resource indicated by the given TCI state" includes: the first node assumes that the same quasi co-location parameter is used for receiving or sending the given signal and used for receiving or sending at least one reference signal resource indicated by the given TCI state.

As one embodiment, the given TCI state is the first TCI state, and the given signal isthe first type of PDSCH in the first serving cell.

As one embodiment, the given TCI state is the second TCI state, and the given signal isthe second type of PDSCH in the first serving cell.

As one embodiment, the given TCI state is at least one of the first TCI state or the second TCI state, and the given signal is a PDSCH in the first serving cell.

As one embodiment, the given TCI state is the first TCI state, and the given signal is the first signal.

As one embodiment, the given TCI state is the second TCI state, and the given signal is the first signal.

As one embodiment, the given TCI state is the target TCI state, and the given signal is the first signal.

As one embodiment, the given TCI state is the reference TCI state, and the given signal is the first signal.

As one embodiment, the given TCI state is one of the first TCI state and the second TCI state whose associated physical cell identity is the same as the physical cell identity of the first serving cell, and the given signal is the first signal.

Typically, the second information block set is used for configuring N CORESETs of a first BWP of the first serving cell.

As one embodiment, the second information block set includes part or all fields in one RRC IE.

As one embodiment, the second information block set includes a plurality of RRC IEs.

As one embodiment, the second information block set includes N RRC IE ControlResourceSets, the N RRC IE ControlResourceSets are respectively used for configuring N CORESETs (Control Resource Sets) of the first serving cell.

As one embodiment, the second information block set comprises part or all fields in RRC IE PDCCH-Config.

As one embodiment, the second information block set comprises a field in RRC IE PDCCH-Config whose name comprises controlResourceSetToAddModList.

As one embodiment, the second information block set comprises both a field in RRC IE PDCCH-Config whose name comprises controlResourceSetToAddModList and a field whose name comprises controlResourceSetToReleaseList.

Typically, a PDCCH scheduling the first type of PDSCH belongs to one CORESET in the first CORESET pool, and a PDCCH scheduling the second type of PDSCH belongs to one CORESET in the second CORESET pool.

As one embodiment, one CORESET (Control Resource Set) comprises a plurality of REs (Resource Element).

As one embodiment, one CORESET (Control Resource Set, CORESET) comprises at least one CCE (Control Channel Element).

As one embodiment, one CCE comprises 9 REGs (Resource Element Group), and one REG comprises 4 REs.

As one embodiment, one CCE comprises 6 REGs, and one REG comprises 12 REs.

As one embodiment, one CORESET is configured by the RRC IE (Information Element) ControlResourceSet.

As one embodiment, the specific definition of CORESET refers to Chapter 10 of 3GPP TS 38.213.

As one embodiment, the specific definition of the RRC IE ControlResourceSet refers to Chapter 6.3.2 of 3GPP TS 38.331.

As one embodiment, one PDCCH candidate in one CORESET belongs to the one CORESET in frequency domain.

As one embodiment, one PDCCH candidate in one CORESET is one PDCCH candidate in a search space set associated with the one CORESET.

As one embodiment, one PDCCH candidate in one CORESET comprises at least one CCE in the one CORESET.

As one embodiment, any PDCCH candidate in a search space set associated with one CORESET comprises at least one CCE in the one CORESET.

As one embodiment, one PDCCH candidate in a search space set associated with a given CORESET belongs to the given CORESET.

As one embodiment, the meaning of the phrase "a search space set associated with one CORESET" includes: one CORESET is used for determining time-frequency resources occupied by a search space set associated with the one CORESET in a monitoring occasion.

As one embodiment, the meaning of the phrase "a search space set associated with one CORESET" includes: one CORESET comprises time-frequency resources occupied by a search space set associated with the one CORESET in a monitoring occasion.

As one embodiment, the meaning of the phrase "a search space set associated with one CORESET" includes: REs occupied by one CORESET comprise REs occupied by a search space set associated with the one CORESET in a monitoring occasion.

As one embodiment, the meaning of the phrase "a search space set associated with one CORESET" includes: an RB (RBs) occupied by one CORESET in the frequency domain comprises (comprise) an RB (RBs) occupied by a search space set associated with the one CORESET in the frequency domain.

As one embodiment, the meaning of the phrase "a search space set associated with one CORESET" includes: frequency-domain resources occupied by one CORESET comprise frequency-domain resources occupied by a search space set associated with the one CORESET.

As one embodiment, the meaning of the phrase "a search space set associated with one CORESET" includes: a symbol (symbols) occupied by one CORESET is (are) used for determining a symbol (symbols) occupied by a search space set associated with the one CORESET in a detection occasion.

As one embodiment, the meaning of the phrase "a search space set associated with one CORESET" includes: a symbol (symbols) occupied by one CORESET comprises (comprise) a symbol (symbols) occupied by a search space set associated with the one CORESET in a detection occasion.

As one embodiment, the meaning of the phrase "a search space set associated with one CORESET" includes: configuration information of a search space set associated with one CORESET comprises an index of the one CORESET.

As one embodiment, the monitoring occasion comprises a time period.

As one embodiment, the monitoring occasion comprises at least one symbol.

As one embodiment, the monitoring occasion comprises a slot.

As one embodiment, the monitoring occasion comprises a sub-slot.

As one embodiment, the monitoring occasion comprises a subframe.

As one embodiment, any CORESET among the N CORESETs belongs to only one CORESET pool among the first CORESET pool and the second CORESET pool.

As one embodiment, "one CORESET belongs to the first CORESET pool" is equivalent to "one CORESET is associated with an index of the first CORESET pool"; and "one CORESET belongs to the second CORESET pool" is equivalent to "one CORESET is associated with an index of the second CORESERT pool".

As one embodiment, when one CORESET is configured with a coresetPoolIndex parameter, a value of the coresetPoolIndex parameter indicates an index of a CORESET pool to which the one CORESET is associated.

As one embodiment, when one CORESET is not configured with a oresetPoolIndex parameter, the one CORESET is associated with an index of the first CORESET pool.

As one embodiment, when one CORESET is configured with a oresetPoolIndex parameter, a value of the coresetPoolIndex parameter indicates an index of a CORESET pool to which the one CORESET belongs.

As one embodiment, when one CORESET is not configured with a coresetPoolIndex parameter, the one CORESET belongs to the first CORESET pool.

As one embodiment, the first CORESET pool is a CORESET pool with a coresetPoolIndex value of 0, and the second CORESET pool is a CORESET pool with a coresetPoolIndex value of 1.

As one embodiment, the first CORESET pool is different from a CORESET pool with a coresetPoolIndex value of 0, and the second CORESET pool is different from a CORESET pool with a coresetPoolIndex value of 1.

As one embodiment, the specific definition of the coresetPoolIndex refers to Chapter 10 of 3GPP TS38.213.

As one embodiment, an index of the first CORESET pool is different from an index of the second CORESET pool.

As one embodiment, an index of the first CORESET pool and an index of the second CORESET pool are different non-negative integers.

As one embodiment, an index of the first CORESET pool and an index of the second CORESET pool are different positive integers.

As one embodiment, an index of the first CORESET pool and an index of the second CORESET pool are 0 and 1, respectively.

As one embodiment, an index of the first CORESET pool and an index of the second CORESET pool are 1 and 0, respectively.

As one embodiment, a CORESET to which the first signaling belongs belongs to one of the first CORESERT pool or the second CORESERT pool, and a target CORESET pool is one CORESET pool of the first CORESET pool and the second CORESET pool that comprises the CORESET to which the first signaling belongs; when the target CORESET pool is the first CORESERT pool, the target TCI state is the first TCI state; and when the target CORESET pool is the second CORESERT pool, the target TCI state is the second TCI state.

As one sub-embodiment of the above-mentioned embodiments, the first signal is a PDSCH.

As one sub-embodiment of the above-mentioned embodiments, the first signal is the first type of PDSCH or the second type of PDSCH.

As one sub-embodiment of the above-mentioned embodiments, the first signal is a third type of PDSCH.

As one sub-embodiment of the above-mentioned embodiments, the first signal is an aperiodic CSI-RS.

As one embodiment, the first signal is a PDSCH; when the first signal is the first type of PDSCH, the target TCI state is the first TCI state; and when the first signal is the second type of PDSCH, the target TCI state is the second TCI state.

As one embodiment, the first signal is a third type of PDSCH, and the target TCI state is the first TCI state or the second TCI state.

As one embodiment, the first signal is a third type of PDSCH, and the target TCI state is the first TCI state.

As one embodiment, the first signal is an aperiodic CSI-RS, and the target TCI state is the first TCI state.

As one embodiment, the first signaling is a first type of DCI.

As one embodiment, the first signaling is DCI, and CRC of the first signaling is scrambled by an RNTI in a second RNTI set, and the second RNTI set comprises at least one RNTI.

As one embodiment, CRC of DCI scheduling the first type of PDSCH and the second type of PDSCH is scrambled by an RNTI in a second RNTI set, and the second RNTI set comprises at least one RNTI.

As one embodiment, both the first type of PDSCH and the second type of PDSCH are UE-specific PDSCHs.

As one embodiment, the third type of PDSCH is a non-UE-specific PDSCH.

As one embodiment, the third type of PDSCH is a common PDSCH.

As one embodiment, the third type of PDSCH is a UE group common PDSCH.

As one embodiment, the first type of PDSCH and the second type of PDSCH are scrambled by the same RNTI.

As one embodiment, the first type of PDSCH and the second type of PDSCH are scrambled by different RNTIs.

As one embodiment, both the first type of PDSCH and the second type of PDSCH are scrambled by an RNTI in a second RNTI set.

As one embodiment, the third type of PDSCH is scrambled by an RNTI in a first RNTI set, and the second RNTI set and the first RNTI set are different.

As one embodiment, the meaning of the sentence "one PDSCH is scrambled by one RNTI" includes: the one RNTI is used for generating a scrambling sequence of the one PDSCH.

As one embodiment, the meaning of the sentence "one PDSCH is scrambled by one RNTI" includes: the one RNTI is used for generating a scrambling sequence of the one PDSCH.

As one embodiment, the meaning of the sentence "one PDSCH is scrambled by one RNTI" includes: the one RNTI is used for generating an initialization sequence of a scrambling sequence generator of the one PDSCH.

As one embodiment, the meaning of the sentence "one PDSCH is scrambled by one RNTI" includes: the one RNTI is *n_{RNTI}, n_{RNTI}* is used for generating *c*ᵢₙᵢₜ, a scrambling sequence generator that generates a scrambling sequence of the one PDSCH is initialized by *cᵢₙᵢₜ*.

As one sub-embodiment of the above-mentioned embodiments, *cᵢₙᵢₜ* = *n_{RNTI}* · 2¹⁵ + *q* . 2¹⁴ + *n_{ID}.*

As one sub-embodiment of the above-mentioned embodiments, *cᵢₙᵢₜ* is linearly related to *n_{RNTI}.*

As one sub-embodiment of the above-mentioned embodiments, *cᵢₙᵢₜ* has a functional relationship with *n_{RNTI}.*

As one sub-embodiment of the above-mentioned embodiments, the specific definitions of *n_{RNTI}* and *cᵢₙᵢₜ* refer to Chapter 7.3.1.1 of 3GPP TS38.211.

As one embodiment, the first RNTI set comprises at least one UE group common RNTI.

As one embodiment, the first RNTI set comprises at least one common RNTI.

As one embodiment, the first RNTI set comprises at least one of G-RNTI, G-CS-RNTI, or MCCH-RNTI.

As one embodiment, the first RNTI set comprises at least one of SI-RNTI, RA-RNTI, MsgB-RNTI, TC-RNTI, P-RNTI, PEI-RNTI, INT-RNTI, SFI-RNTI, TPC-PUSCH-RNTI, TPC-PUCCH-RNTI, TPC-SRS-RNTI, CI-RNTI, or PS-RNTI.

As one embodiment, the second RNTI set comprises at least one UE-specific RNTI.

As one embodiment, the second RNTI set comprises at least one of C-RNTI, MCS-C-RNTI, or CS-RNTI.

As one embodiment, the second RNTI set comprises at least one of C-RNTI, MCS-C-RNTI, SP-CSI-RNTI, CS-RNTI, SL-RNTI, SL-CS-RNTI, or SL Semi-Persistent Scheduling V-RNTI.

As one embodiment, the first type of PDSCH and the second type of PDSCH are scheduled by a PDCCH in a USS set.

As one embodiment, the third type of PDSCH is scheduled by a PDCCH in a CSS set.

As one embodiment, a PDCCH in a USS set is used for scheduling the first type of PDSCH and the second type of PDSCH.

As one embodiment, a PDCCH in a USS set is used for scheduling the first type of PDSCH, the second type of PDSCH, and the third type of PDSCH.

As one embodiment, a PDCCH in a CSS set is used for scheduling only the third type of PDSCH among the first type of PDSCH, the second type of PDSCH, and the third type of PDSCH.

As one embodiment, the first node device further comprises:
a first transmitter for sending a third signal;
wherein the first signal is a PDSCH, and the third signal is used for indicating whether the first signal is correctly received; or, the first signal is an aperiodic CSI-RS, and the third signal comprises CSI (Channel State Information) calculated based on measurement of the first signal.

As one sub-embodiment of the above-mentioned embodiments, the second node device further comprises:
a second receiver for receiving a third signal;
wherein the first signal is a PDSCH, and the third signal is used for indicating whether the first signal is correctly received; or, the first signal is an aperiodic CSI-RS, and the third signal comprises CSI (Channel State Information) calculated based on measurement of the first signal.

As one sub-embodiment of the above-mentioned embodiments, the third signal is transmitted on a PUSCH.

As one sub-embodiment of the above-mentioned embodiments, the third signal is transmitted on a PUCCH.

### Embodiment 6

Embodiment 6 illustrates a schematic diagram of a first information block set according to one embodiment of the present application; as shown in FIG. 6.

In Embodiment 6, the first information block set is carried by one DCI (Downlink Control Information) signaling.

As one embodiment, the first information block set comprises a transmission configuration indication field in one DCI signaling.

As one embodiment, the first information block set comprises at least one transmission configuration indication field in one DCI signaling.

As one embodiment, the first information block set comprises one or more transmission configuration indication fields in one DCI signaling.

As one embodiment, the first node device comprises:
a first transmitter for sending a second signal;
wherein third DCI signaling is one DCI signaling carrying the first information block set; and HARQ-ACK associated with the third DCI signaling is carried by the second signal.

As one embodiment, the second signal is transmitted on a PUCCH (Physical Uplink Control CHannel), or the second signal is transmitted on a PUSCH (Physical Uplink Shared CHannel).

As one embodiment, when the third DCI signaling does not carry a DL assignment, the HARQ-ACK associated with the third DCI signaling is an HARQ-ACK corresponding to the third DCI signaling; and when the third DCI signaling schedules a PDSCH, the HARQ-ACK associated with the third DCI signaling is an HARQ-ACK corresponding to a PDSCH scheduled by the third DCI signaling.

As one embodiment, the application of the first TCI state and the second TCI state to a first type of PDSCH and a second type of PDSCH in the first serving cell, respectively, depends on transmission of the second signal.

As one embodiment, the application of the first TCI state and the second TCI state takes effect depending on transmission of the second signal.

As one embodiment, the second signal carries control information.

As one embodiment, an HARQ-ACK associated with the third DCI signaling is an ACK.

As one embodiment, an HARQ-ACK associated with the third DCI signaling indicates the third DCI signaling is correctly received, or, the third DCI signaling schedules a PDSCH (Physical Downlink Shared CHannel), the HARQ-ACK associated with the third DCI signaling indicates a PDSCH scheduled by the third DCI signaling is correctly received.

As one embodiment, the HARQ-ACK associated with the third DCI signaling is an ACK or an NACK.

As one embodiment, the HARQ-ACK associated with the third DCI signaling indicates whether the third DCI signaling is correctly received, or, the third DCI signaling schedules a PDSCH, the HARQ-ACK associated with the third DCI signaling indicates whether a PDSCH scheduled by the third DCI signaling is correctly received.

Typically, "a HARQ-ACK corresponding to the third DCI signaling" indicates whether the third DCI signaling is correctly received; and "an HARQ-ACK corresponding to a PDSCH scheduled by the third DCI signaling" indicates whether a PDSCH scheduled by the third DCI signaling is correctly received.

As one embodiment, the first receiver receives a third PDSCH; wherein the third DCI signaling schedules the third PDSCH, and the HARQ-ACK associated with the third DCI signaling is an HARQ-ACK corresponding to the third PDSCH.

As one sub-embodiment of the above-mentioned embodiments, the second transmitter in the present application sends a third PDSCH; wherein the third DCI signaling schedules the third PDSCH, and the HARQ-ACK associated with the third DCI signaling is an HARQ-ACK corresponding to the third PDSCH.

As one sub-embodiment of the above-mentioned embodiments, the third PDSCH carries one transport block (TB).

As one sub-embodiment of the above-mentioned embodiments, the third DCI signaling indicates scheduling information of the third PDSCH; and the scheduling information of the third PDSCH at least comprises at least one of occupied time domain resources, occupied frequency-domain resources, an MCS (Modulation and Coding Scheme), antenna ports, an HARQ (Hybrid Automatic Repeat reQuest) process number, an RV (Redundancy Version), an NDI (New Data Indicator), and a TCI state.

Typically, "an HARQ-ACK corresponding to the third PDSCH" indicates whether the third PDSCH is correctly received.

As one embodiment, the specific definition of a transmission configuration indication field refers to Chapter 7.3 of 3GPP TS38.212.

As one embodiment, starting from a third time, the first TCI state is applied to a first type of PDSCH and a second type of PDSCH in the first serving cell; and the second signal is used for determining the third time.

As one sub-embodiment of the above-mentioned embodiments, the first signal is not earlier than the third time.

As one sub-embodiment of the above-mentioned embodiments, the first signaling is not earlier than the third time.

As one sub-embodiment of the above-mentioned embodiments, the first signaling is earlier than the third time.

As one embodiment, the meaning of the sentence "the second signal is used for determining the third time" includes: the third time is a time of at least a first interval value after the last symbol occupied by the second signal.

As one embodiment, the meaning of the sentence "the second signal is used for determining the third time" includes: the third time is a start time of the first slot of at least a first interval value after the last symbol occupied by the second signal.

As one embodiment, the meaning of the sentence "the second signal is used for determining the third time" includes: the third time is a start time of the first slot of at least a first interval value after a slot to which the second signal belongs in time domain.

As one embodiment, "after a symbol" means: later than the one symbol in time; and "after a time" means: later than the one time in time.

As one embodiment, "after a symbol" means: not earlier than the one symbol in time; and "after a time" means: not earlier than the time in time.

As one embodiment, the unit of the first interval value is slot.

As one embodiment, the unit of the first interval value is symbol.

As one embodiment, the unit of the first interval value is ms (millisecond).

As one embodiment, the first interval value is a positive integer.

As one embodiment, the first interval value is a positive real number.

As one embodiment, the first interval value is fixed.

As one embodiment, the first interval value is reported by the first node.

As one embodiment, the first interval value is configured by a higher layer parameter.

As one embodiment, the first interval value is BeamAppTime_r17.

As one embodiment, the first interval value is configured by a higher layer parameter beamAppTime-r17.

As one embodiment, a name of a higher layer parameter configuring the first interval value includes beamAppTime.

### Embodiment 7

Embodiment 7 illustrates a schematic diagram of a first information block set according to another embodiment of the present application; as shown in FIG. 7.

In Embodiment 7, the first information block set comprises a first information block and a second information block, the first information block indicates the first TCI state, the second information block indicates the second TCI state, and the first information block and the second information block are respectively carried by two DCI signaling.

As one embodiment, the first node device comprises:
a first transmitter for sending a first sub-signal and sending a second sub-signal;
wherein first DCI signaling is one DCI signaling carrying the first information block, and an HARQ-ACK associated with the first DCI signaling is carried by the first sub-signal; and second DCI signaling is one DCI signaling carrying the second information block, and an HARQ-ACK associated with the second DCI signaling is carried by the second sub-signal.

As one embodiment, the first sub-signal is transmitted on a PUCCH, or the first sub-signal is transmitted on a PUSCH; and the second sub-signal is transmitted on a PUCCH, or the second sub-signal is transmitted on a PUSCH.

As one embodiment, when the first DCI signaling does not carry a DL assignment, the HARQ-ACK associated with the first DCI signaling is a HARQ-ACK corresponding to the first DCI signaling; when the first DCI signaling schedules a PDSCH, the HARQ-ACK associated with the first DCI signaling is an HARQ-ACK corresponding to a PDSCH scheduled by the first DCI signaling; when the second DCI signaling does not carry a DL assignment, the HARQ-ACK associated with the second DCI signaling is an HARQ-ACK corresponding to the second DCI signaling; and when the second DCI signaling schedules a PDSCH, the HARQ-ACK associated with the second DCI signaling is an HARQ-ACK corresponding to a PDSCH scheduled by the second DCI signaling.

As one embodiment, the application of the first TCI state and the second TCI state to a first type of PDSCH and a second type of PDSCH in the first serving cell, respectively, depends on transmission of the first sub-signal and the second sub-signal.

As one embodiment, the application of the first TCI state and the second TCI state takes effect depending on transmission of the first sub-signal and the second sub-signal.

As one embodiment, the first sub-signal carries control information and the second sub-signal carries control information.

As one embodiment, an HARQ-ACK associated with the first DCI signaling is an ACK, and an HARQ-ACK associated with the second DCI signaling is an ACK.

As one embodiment, an HARQ-ACK associated with the first DCI signaling indicates the first DCI signaling is received correctly, or the first DCI signaling schedules a PDSCH, and the HARQ-ACK associated with the first DCI signaling indicates a PDSCH scheduled by the first DCI signaling is received correctly; and an HARQ-ACK associated with the second DCI signaling indicates the second DCI signaling is received correctly, or the second DCI signaling schedules a PDSCH, and the HARQ-ACK associated with the second DCI signaling indicates a PDSCH scheduled by the second DCI signaling is received correctly.

As one embodiment, the HARQ-ACK associated with the first DCI signaling is an ACK or an NACK, and the HARQ-ACK associated with the second DCI signaling is an ACK or an NACK.

As one embodiment, the HARQ-ACK associated with the first DCI signaling indicates whether the first DCI signaling is received correctly, or the first DCI signaling schedules a PDSCH, and the HARQ-ACK associated with the first DCI signaling indicates whether a PDSCH scheduled by the first DCI signaling is received correctly; and the HARQ-ACK associated with the second DCI signaling indicates whether the second DCI signaling is received correctly, or the second DCI signaling schedules a PDSCH, and the HARQ-ACK associated with the second DCI signaling indicates whether a PDSCH scheduled by the second DCI signaling is received correctly.

Typically, "an HARQ-ACK corresponding to the first DCI signaling" indicates whether the first DCI signaling is correctly received; "an HARQ-ACK corresponding to a PDSCH scheduled by the first DCI signaling" indicates whether a PDSCH scheduled by the first DCI signaling is received correctly; "an HARQ-ACK corresponding to the second DCI signaling" indicates whether the second DCI signaling is correctly received; and "an HARQ-ACK corresponding to a PDSCH scheduled by the second DCI signaling" indicates whether a PDSCH scheduled by the second DCI signaling is received correctly.

As one embodiment, the first receiver receives a first PDSCH; wherein the first DCI signaling schedules the first PDSCH, and the HARQ-ACK associated with the first DCI signaling is an HARQ-ACK corresponding to the first PDSCH.

As one sub-embodiment of the above-mentioned embodiments, the second transmitter in the present application sends a first PDSCH; wherein the first DCI signaling schedules the first PDSCH, and the HARQ-ACK associated with the first DCI signaling is an HARQ-ACK corresponding to the first PDSCH.

As one sub-embodiment of the above-mentioned embodiments, the first PDSCH carries one transport block (TB).

As one sub-embodiment of the above-mentioned embodiments, the first DCI signaling indicates scheduling information of the first PDSCH; and the scheduling information of the first PDSCH at least comprises: occupied time domain resources, occupied frequency-domain resources, an MCS (Modulation and Coding Scheme), antenna ports, an HARQ (Hybrid Automatic Repeat reQuest) process number, an RV (Redundancy Version), an NDI (New Data Indicator), and a TCI state.

Typically, "a HARQ-ACK corresponding to the first PDSCH" indicates whether the first PDSCH is received correctly.

As one embodiment, the first receiver receives a second PDSCH; wherein the second DCI signaling schedules the second PDSCH, and the HARQ-ACK associated with the second DCI signaling is an HARQ-ACK corresponding to the second PDSCH.

As one sub-embodiment of the above-mentioned embodiments, the second transmitter in the present application sends a second PDSCH; wherein the second DCI signaling schedules the second PDSCH, and the HARQ-ACK associated with the second DCI signaling is an HARQ-ACK corresponding to the second PDSCH.

As one sub-embodiment of the above-mentioned embodiments, the second PDSCH carry a transport block.

As one sub-embodiment of the above-mentioned embodiments, the second DCI signaling indicates scheduling information of the second PDSCH; and the scheduling information of the second PDSCH at least comprises: occupied time domain resources, occupied frequency-domain resources, an MCS (Modulation and Coding Scheme), antenna ports, an HARQ (Hybrid Automatic Repeat reQuest) process number, an RV (Redundancy Version), an NDI (New Data Indicator), and a TCI state.

Typically, "an HARQ-ACK corresponding to the second PDSCH" indicates whether the second PDSCH is received correctly.

As one embodiment, the specific definition of a transmission configuration indication field refers to Chapter 7.3 of 3GPP TS38.212.

As one embodiment, starting from a first time, the first TCI state is applied to a first type of PDSCH in the first serving cell; starting from a second time, the second TCI state is applied to a second type of PDSCH in the first serving cell; and the first sub-signal is used for determining the first time, and the second sub-signal is used for determining the second time.

As one sub-embodiment of the above-mentioned embodiments, the first signal is not earlier than the first time and the second time.

As one sub-embodiment of the above-mentioned embodiments, the first signaling is not earlier than the first time and the second time.

As one sub-embodiment of the above-mentioned embodiments, the first signaling is earlier than the first time and the second time.

As one embodiment, starting from a third time, the first TCI state is applied to a first type of PDSCH and a second type of PDSCH in the first serving cell; the third time is a later time of a first time and a second time; and the first sub-signal is used for determining the first time, and the second sub-signal is used for determining the second time.

As one sub-embodiment of the above-mentioned embodiments, the first signal is not earlier than the third time.

As one sub-embodiment of the above-mentioned embodiments, the first signaling is not earlier than the third time.

As one sub-embodiment of the above-mentioned embodiments, the first signaling is earlier than the third time.

As one embodiment, the meaning of the sentence "the first sub-signal is used for determining the first time" includes: the first time is a time of at least a first interval value after the last symbol occupied by the first sub-signal; and the meaning of the sentence "the second sub-signal is used for determining the second time" includes: the second time is a time of at least a second interval value after the last symbol occupied by the second sub-signal.

As one embodiment, the meaning of the sentence "the first sub-signal is used for determining the first time" includes: the first time is a start time of the first slot of at least a first interval value after the last symbol occupied by the first sub-signal; and the meaning of the sentence "the second sub-signal is used for determining the second time" includes: the second time is a start time of the first slot of at least a second interval value after the last symbol occupied by the second sub-signal.

As one embodiment, the meaning of the sentence "the first sub-signal is used for determining the first time" includes: the first time is a start time of the first slot of at least a first interval value after a slot to which the first sub-signal belongs in time domain; and the meaning of the sentence "the second sub-signal is used for determining the second time" includes: the second time is a start time of the first slot of at least a second interval value after a slot to which the second sub-signal belongs in time domain.

As one embodiment, the second interval value is the same as the first interval value.

As one embodiment, the second interval value and the first interval value are configured by two higher layer parameters respectively.

As one embodiment, the unit of the second interval value is slot.

As one embodiment, the unit of the second interval value is symbol.

As one embodiment, the unit of the second interval value is ms (millisecond).

As one embodiment, the second interval value is a positive integer.

As one embodiment, the second interval value is a positive real number.

As one embodiment, the second interval value is fixed.

As one embodiment, the second interval value is reported by the first node to a base station.

As one embodiment, the second interval value is configured by a higher layer parameter.

As one embodiment, the second interval value is BeamAppTime_r17.

As one embodiment, the second interval value is configured by a higher layer parameter beamAppTime-r17.

As one embodiment, a name of a higher layer parameter configuring the second interval value includes beamAppTime.

### Embodiments 8A-8B

Embodiments 8A-8B respectively illustrate schematic diagrams of a quasi co-location parameter of a first signal according to one embodiment of the present application; as shown in FIGS. 8A-8B.

In Embodiment 8A, the quasi co-location parameter of the first signal depends on whether a physical cell identity associated with a target TCI state is the same as a physical cell identity of the first serving cell, the target TCI state being one of the first TCI state or the second TCI state; a CORESET to which the first signaling belongs belongs to one of the first CORESET pool or the second CORESET pool, and a target CORESET pool is one CORESET pool of the first CORESET pool and the second CORESET pool that comprises the CORESET to which the first signaling belongs; when the target CORESET pool is the first CORESET pool, the target TCI state is the first TCI state; and when the target CORESET pool is the second CORESET pool, the target TCI state is the second TCI state.

Typically, "a CORESET to which the first signaling belongs" is a CORESET to which a PDCCH occupied by the first signaling belongs.

Typically, "a CORESET to which the first signaling belongs" is a CORESET associated with a search space to which a PDCCH occupied by the first signaling belongs.

Typically, the first TCI state is applied to at least one CORESET in the first CORESET pool, and the first TCI state is applied to at least one CORESET in the second CORESET pool.

Typically, the first TCI state is applied to at least one CORESET associated with USS in the first CORESET pool, and the first TCI state is applied to at least one CORESET associated with USS in the second CORESET pool.

As one embodiment, there exists one CORESET in the first CORESET pool to which the first TCI state is not applied.

As one embodiment, there exists one CORESET in the second CORESET pool to which the first TCI state is not applied.

Typically, the meaning of "one TCI state is applied to one CORESET" includes: the one TCI state is used for indicating quasi co-location information of a DMRS antenna port for a PDCCH reception in the CORESET.

Typically, the meaning of "one TCI state is applied to one CORESET" includes: the TCI state is used for indicating a quasi co-location parameter of a DMRS antenna port for a PDCCH reception in the CORESET.

Typically, the meaning of "one TCI state is applied to one CORESET" includes: the TCI state indicates a quasi co-location relationship between at least one reference signal resource and a DMRS antenna port for a PDCCH reception in the CORESET.

Typically, the meaning of "one TCI state is applied to one CORESET" includes: a DMRS antenna port for a PDCCH reception in the CORESET is quasi co-located with at least one reference signal resource indicated by the TCI state.

In Embodiment 8B, the quasi co-location parameter of the first signal depends on whether a physical cell identity associated with a target TCI state is the same as a physical cell identity of the first serving cell, the target TCI state being one of the first TCI state or the second TCI state.

As one embodiment, at least one of the first TCI state or the second TCI state is applied to a PDSCH in the first serving cell.

As one embodiment, the first TCI state and the second TCI state are applied to a PDSCH in the first serving cell.

As one embodiment, at least one of the first TCI state or the second TCI state is applied to a PDSCH and a PDCCH in the first serving cell.

As one embodiment, the first TCI state and the second TCI state are applied to a PDSCH and a PDCCH in the first serving cell.

As one embodiment, starting from a third time, at least one of the first TCI state or the second TCI state is applied to a PDSCH in the first serving cell; and the second signal is used for determining the third time.

As one embodiment, starting from a third time, the first TCI state and the second TCI state are applied to a PDSCH in the first serving cell; and the second signal is used for determining the third time.

As one embodiment, starting from a third time, at least one of the first TCI state or the second TCI state is applied to a PDSCH and a PDCCH in the first serving cell; and the second signal is used for determining the third time.

As one embodiment, starting from a third time, the first TCI state and the second TCI state are applied to a PDSCH and a PDCCH in the first serving cell; and the second signal is used for determining the third time.

As one embodiment, at least one of the first TCI state or the second TCI state is used for determining a quasi co-location parameter of a DMRS (DeModulation Reference Signals) port of a PDSCH in the first serving cell.

As one embodiment, at least one of the first TCI state or the second TCI state is used for indicating a quasi co-location parameter of a DMRS (DeModulation Reference Signals) port of a PDSCH in the first serving cell.

As one embodiment, at least one of the first TCI state or the second TCI state indicates a quasi co-location relationship between at least one reference signal resource and a DMRS port of a PDSCH in the first serving cell.

As one embodiment, a DMRS port of a PDSCH in the first serving cell is quasi co-located with at least one reference signal resource indicated by at least one of the first TCI state or the second TCI state.

As one embodiment, the first signal is an aperiodic CSI-RS.

As one embodiment, the first signal is a PDSCH.

As one embodiment, the first signaling is DCI signaling of the first serving cell.

As one embodiment, the first signaling is DCI signaling of a serving cell other than the first serving cell. Typically, the first signal is a PDSCH of the first serving cell.

As one embodiment, the first node first determines the target TCI state from the first TCI state and the second TCI state, then determines the quasi co-location parameter of the first signal according to whether a physical cell identity associated with the target TCI state is the same as a physical cell identity of the first serving cell.

As one embodiment, the first node device comprises:
the first receiver for determining the target TCI state from the first TCI state and the second TCI state.

As one embodiment, a method used in the first node comprises:
determining the target TCI state from the first TCI state and the second TCI state.

As one embodiment, the target TCI state is the first TCI state.

As one embodiment, the target TCI state is the first TCI state, and the first TCI state is the first TCI state of the first TCI state and the second TCI state.

As one embodiment, the first information block set comprises a transmission configuration indication field in one DCI signaling, the transmission configuration indication field comprised in the first information block set indicates the first TCI state and the second TCI state, and the first TCI state is the first TCI state indicated by the transmission configuration indication field comprised in the first information block set; and the target TCI state is the first TCI state.

As one embodiment, the first information block set comprises a transmission configuration indication field in one DCI signaling, and the transmission configuration indication field comprised in the first information block set indicates the first TCI state and the second TCI state.

As one sub-embodiment of the above-mentioned embodiments, the first TCI state is a first one TCI state indicated by the transmission configuration indication field comprised in the first information block set, and the second TCI state is a second TCI state indicated by the transmission configuration indication field comprised in the first information block set.

As one sub-embodiment of the above-mentioned embodiments, the first TCI state is the first TCI state of the first TCI state and the second TCI state.

As one embodiment, a CORESET to which the first signaling belongs belongs to one of a first CORESET pool or a second CORESET pool, and a target CORESET pool is one CORESET pool of the first CORESET pool and the second CORESET pool that comprises the CORESET to which the first signaling belongs; when the target CORESET pool is the first CORESET pool, the target TCI state is the first TCI state; and when the target CORESET pool is the second CORESET pool, the target TCI state is the second TCI state.

As one sub-embodiment of the above-mentioned embodiments, the first node comprises: receiving a second information block set; wherein the second information block set is carried by higher layer signaling, and the second information block set is used for configuring N CORESETs of the first serving cell, N being a positive integer greater than 1; any CORESET in the N CORESETs belongs to a first CORESET pool or a second CORESET pool, at least one CORESET in the N CORESETs belongs to the first CORESET pool, at least one CORESET in the N CORESETs belongs to the second CORESET pool, the first CORESET pool comprises at least one CORESET, the second CORESET pool comprises at least one CORESET, and the first CORESET pool and the second CORESET pool are different.

### Embodiment 9

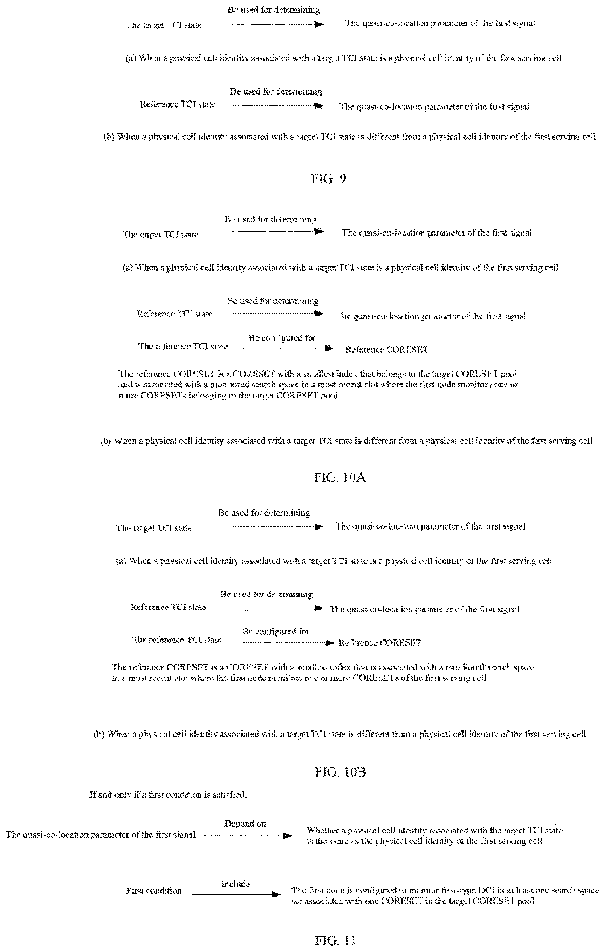

Embodiment 9 illustrates a schematic diagram of a relationship between quasi co-location parameter of a first signal and a physical cell identity associated with a target TCI state according to one embodiment of the present application; as shown in FIG. 9.

In Embodiment 9, when a physical cell identity associated with the target TCI state is a physical cell identity of the first serving cell, the target TCI state is used for determining the quasi co-location parameter of the first signal; and when a physical cell identity associated with the target TCI state is different from a physical cell identity of the first serving cell, a reference TCI state is used for determining the quasi co-location parameter of the first signal.

As one embodiment, whether a target TCI state is used for determining the quasi co-location parameter of the first signal depends on whether a physical cell identity associated with the target TCI state is the same as a physical cell identity of the first serving cell.

As one embodiment, the reference TCI state and the target TCI state are different.

As one embodiment, the reference TCI state is predefined.

As one embodiment, the reference TCI state is preconfigured.

As one embodiment, the reference TCI state is configurable.

As one embodiment, the reference TCI state is a TCI state applied to one CORESET.

As one embodiment, the reference TCI state is a TCI state applied to a CORESET associated with one CSS.

As one embodiment, the reference TCI state is one of T TCI states, where the T TCI states are configured by RRC or activated or indicated by an MAC CE, and T is a positive integer greater than 1.

As one embodiment, the reference TCI state belongs to a first TCI state group, and the first TCI state group comprises 2 TCI states applied to a PDSCH.

As one sub-embodiment of the above-mentioned embodiments, the first TCI state group is one of T TCI state groups, where the T TCI state groups are configured by RRC or activated or indicated by an MAC CE, and T is a positive integer greater than 1.

As one sub-embodiment of the above-mentioned embodiments, 2 TCI states applied to a PDSCH in the first TCI state group are applied to the first type of PDSCH and the second type of PDSCH respectively.

As one sub-embodiment of the above-mentioned embodiments, 2 TCI states applied to a PDSCH in the first TCI state group are configured or activated for the first type of PDSCH and the second type of PDSCH respectively.

As one sub-embodiment of the above-mentioned embodiments, the reference TCI state is the first TCI state in the first TCI state group.

As one sub-embodiment of the above-mentioned embodiments, the first signal is an aperiodic CSI-RS, and the reference TCI state is the first TCI state in the first TCI state group.

As one sub-embodiment of the above-mentioned embodiments, when the first signal is the first type of PDSCH, the reference TCI state is the first TCI state in the first TCI state group; and when the first signal is the second type of PDSCH, the reference TCI state is the second TCI state in the first TCI state group.

As one sub-embodiment of the above-mentioned embodiments, when the target CORESET pool is the first CORESERT pool, the reference TCI state is the first TCI state in the first TCI state group; and when the target CORESET pool is the second CORESERT pool, the reference TCI state is the second TCI state in the first TCI state group.

As one embodiment, T codepoints respectively indicate T TCI states applied to a PDSCH, and the reference TCI state is one TCI state indicated by the lowest codepoint among the T codepoints.

As one sub-embodiment of the above-mentioned embodiments, the first signaling comprises a Transmission Configuration Indication field, and the Transmission Configuration Indication field in the first signaling at least comprises the N codepoints.

As one sub-embodiment of the above-mentioned embodiments, the first signaling comprises a Transmission Configuration Indication field, and the Transmission Configuration Indication field in the first signaling at least comprises the N codepoints.

As one sub-embodiment of the above-mentioned embodiments, the first signaling comprises a Transmission Configuration Indication field, the Transmission Configuration Indication field in the first signaling at least comprises the N codepoints, and the number of bits comprised in the Transmission Configuration Indication field is the smallest integer not less than the base-2 logarithm of N.

As one embodiment, T codepoints respectively indicate T TCI state groups, at least one TCI state group among the T TCI state groups comprises 2 TCI states applied to a PDSCH, and a first TCI state group is one TCI state group indicated by the lowest codepoint among the T codepoints that satisfies "indicating 2 TCI states applied to a PDSCH"; and the reference TCI state is one TCI state in the first TCI state group.

As one sub-embodiment of the above-mentioned embodiments, the first signaling comprises a Transmission Configuration Indication field, and the Transmission Configuration Indication field in the first signaling at least comprises the N codepoints.

As one sub-embodiment of the above-mentioned embodiments, the first signaling comprises a Transmission Configuration Indication field, the Transmission Configuration Indication field in the first signaling at least comprises the N codepoints, and the number of bits comprised in the Transmission Configuration Indication field is the smallest integer not less than the base-2 logarithm of N.

As one sub-embodiment of the above-mentioned embodiments, 2 TCI states applied to a PDSCH in the first TCI state group are applied to the first type of PDSCH and the second type of PDSCH respectively.

As one sub-embodiment of the above-mentioned embodiments, 2 TCI states applied to a PDSCH in the first TCI state group are configured or activated for the first type of PDSCH and the second type of PDSCH respectively.

As one sub-embodiment of the above-mentioned embodiments, the reference TCI state is the first TCI state in the first TCI state group.

As one sub-embodiment of the above-mentioned embodiments, the first signal is an aperiodic CSI-RS, and the reference TCI state is the first TCI state in the first TCI state group.

As one sub-embodiment of the above-mentioned embodiments, when the first signal is the first type of PDSCH, the reference TCI state is the first TCI state in the first TCI state group; and when the first signal is the second type of PDSCH, the reference TCI state is the second TCI state in the first TCI state group.

As one sub-embodiment of the above-mentioned embodiments, when the target CORESET pool is the first CORESERT pool, the reference TCI state is the first TCI state in the first TCI state group; and when the target CORESET pool is the second CORESERT pool, the reference TCI state is the second TCI state in the first TCI state group.

As one embodiment, any codepoint in the Transmission Configuration Indication field is a non-negative integer.

As one embodiment, any codepoint in the Transmission Configuration Indication field is a binary bit sequence.

As one embodiment, any codepoint in the Transmission Configuration Indication field is a non-negative integer indicated by a binary bit sequence.

As one embodiment, any codepoint in the Transmission Configuration Indication field corresponds to a value within a value range of the first field.

As one embodiment, any codepoint in the Transmission Configuration Indication field is a value within a value range of the first field.

Typically, a TCI state or a TCI state group corresponding to any codepoint in the Transmission Configuration Indication field is configured by RRC or activated or indicated by an MAC CE.

As one embodiment, the T TCI states are configured or activated for the first type of PDSCH, or the T TCI states are configured or activated for the second type of PDSCH.

As one embodiment, the T TCI states are configured or activated for the first type of PDSCH or the second type of PDSCH.

As one embodiment, the first signal is an aperiodic CSI-RS; and the T TCI states are configured or activated for the first type of PDSCH and the second type of PDSCH.

As one embodiment, the first signal is a PDSCH; when the first signal is the first type of PDSCH, the T TCI states are configured or activated for the first type of PDSCH; and when the first signal is the second type of PDSCH, the T TCI states are configured or activated for the second type of PDSCH.

As one embodiment, when the target CORESET pool is the first CORESET pool, the T TCI states are configured or activated for a PDSCH scheduled by a PDCCH in the first CORESET pool; and when the target CORESET pool is the second CORESET pool, the T TCI states are configured or activated for a PDSCH scheduled by a PDCCH in the second CORESET pool.

As one embodiment, the T TCI state groups are configured or activated for the first type of PDSCH and the second type of PDSCH.

As one embodiment, a given TCI state group is any TCI state group among the T TCI state groups that comprises 2 TCI states applied to a PDSCH, and 2 TCI states applied to a PDSCH in the given TCI state group are configured or activated for the first type of PDSCH and the second type of PDSCH respectively.

### Embodiments 10A-10B

Embodiments 10A-10B respectively illustrate schematic diagrams of a relationship between quasi co-location parameter of a first signal and a physical cell identity associated with a target TCI state according to another embodiment of the present application; as shown in FIGS. 10A-10B.

In Embodiment 10A, when a physical cell identity associated with the target TCI state is a physical cell identity of the first serving cell, the target TCI state is used for determining the quasi co-location parameter of the first signal; and when the physical cell identity associated with the target TCI state is different from the physical cell identity of the first serving cell, a reference TCI state is used for determining the quasi co-location parameter of the first signal; and the reference TCI state is a TCI state configured for a reference CORESET, and the reference CORESET is a CORESET with a smallest index that is associated with a monitored search space and belongs to the target CORESET pool in a most recent time slot where the first node monitors one or more CORESETs belonging to the target CORESET pool.

In Embodiment 10B, when a physical cell identity associated with the target TCI state is a physical cell identity of the first serving cell, the target TCI state is used for determining the quasi co-location parameter of the first signal; and when the physical cell identity associated with the target TCI state is different from the physical cell identity of the first serving cell, a reference TCI state is used for determining the quasi co-location parameter of the first signal; and the reference TCI state is one TCI state configured for a reference CORESET; and the reference CORESET is a CORESET with the smallest index that is associated with a monitored search space in a most recent slot where the first node monitors one or more CORESETs of the first serving cell.

As one embodiment, the reference CORESET is a CORESET with the smallest index that is associated with a monitored search space in a most recent slot where the first node monitors one or more CORESETs in active BWP of the first serving cell.

### Embodiment 11

Embodiment 11 illustrates a schematic diagram of a first condition according to one embodiment of the present application; as shown in FIG. 11.

In Embodiment 11, the quasi co-location parameter of the first signal depends on whether a physical cell identity associated with the target TCI state is the same as the physical cell identity of the first serving cell if and only if a first condition is satisfied; and the first condition comprises: the first node is configured to monitor a first type of DCI in at least one search space set associated with a CORESET in the target CORESET pool.

As one embodiment, the first condition comprises: a time offset between the first signaling and the first signal being less than a first threshold.

As one embodiment, CRC of the first type of DCI is scrambled by an RNTI (Radio Network Temporary Identifier) in a first RNTI set, and the first RNTI set comprises at least one RNTI.

As one embodiment, the first type of DCI is used for scheduling a third type of PDSCH, and the third type of PDSCH is different from both the first type of PDSCH and the second type of PDSCH.

As one embodiment, a CORESET supporting the first type of DCI is associated with CSS.

As one embodiment, the first type of DCI is common DCI.

As one embodiment, the first type of DCI is UE group common DCI.

As one embodiment, an RNTI in a first RNTI set is used for generating a scrambling sequence of the first type of DCI.

As one embodiment, an RNTI in a first RNTI set is used for generating an initialization sequence of a scrambling sequence generator of the first type of DCI.

As one embodiment, an RNTI in a first RNTI set is *n_{RNTI}, n_{RNTI}* is used for generating *cᵢₙᵢₜ*, and a scrambling sequence generator that generates a scrambling sequence of the first type of DCI is initialized by *cᵢₙᵢₜ.*

As one sub-embodiment of the above-mentioned embodiments, *cᵢₙᵢₜ* = (*n_{RNTI}* · 2¹⁶ + *n_{ID}*)*mod* 2³¹.

As one sub-embodiment of the above-mentioned embodiments, *cᵢₙᵢₜ* has a functional relationship with *n_{RNTI}.*

As one sub-embodiment of the above-mentioned embodiments, the specific definitions of *n_{RNTI}* and *cᵢₙᵢₜ* refer to Chapter 7.3.2.3 of 3GPP TS38.211.

### Embodiment 12

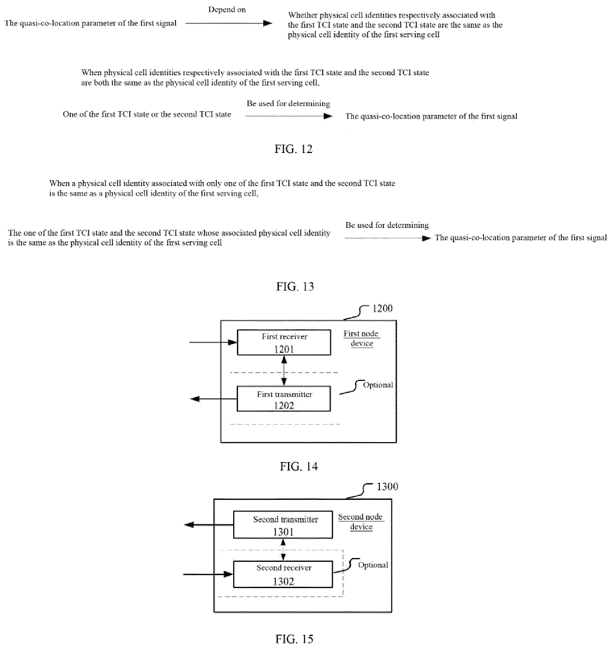

Embodiment 12 illustrates a schematic diagram of a quasi co-location parameter of a first signal according to one embodiment of the present application; as shown in FIG. 12.

In Embodiment 12, the quasi co-location parameter of the first signal depends on whether physical cell identities respectively associated with the first TCI state and the second TCI state are the same as the physical cell identity of the first serving cell; and when the physical cell identities respectively associated with the first TCI state and the second TCI state are both the same as the physical cell identity of the first serving cell, one of the first TCI state or the second TCI state is used for determining the quasi co-location parameter of the first signal.

As one embodiment, when physical cell identities respectively associated with the first TCI state and the second TCI state are both the same as the physical cell identity of the first serving cell, the target TCI state in the present application is used for determining the quasi co-location parameter of the first signal.

As one embodiment, when physical cell identities respectively associated with the first TCI state and the second TCI state are both different from the physical cell identity of the first serving cell, the reference TCI state in the present application is used for determining the quasi co-location parameter of the first signal.

As one embodiment, when a physical cell identity associated with only one of the first TCI state and the second TCI state is the same as a physical cell identity of the first serving cell, the first TCI state or the second TCI state is used for determining the quasi co-location parameter of the first signal.

As one embodiment, when a physical cell identity associated with only one of the first TCI state and the second TCI state is the same as a physical cell identity of the first serving cell, the target TCI state in the present application is used for determining the quasi co-location parameter of the first signal.

As one embodiment, when a physical cell identity associated with only one of the first TCI state and the second TCI state is the same as a physical cell identity of the first serving cell, the reference TCI state in the present application is used for determining the quasi co-location parameter of the first signal.

### Embodiment 13

Embodiment 13 illustrates a schematic diagram of a quasi co-location parameter of a first signal according to one embodiment of the present application; as shown in FIG. 10.

In Embodiment 13, when a physical cell identity associated with only one of the first TCI state and the second TCI state is the same as a physical cell identity of the first serving cell, the one of the first TCI state and the second TCI state whose associated physical cell identity is the same as the physical cell identity of the first serving cell is used for determining the quasi co-location parameter of the first signal.

As one embodiment, the first signal is a third type of PDSCH; and when a physical cell identity associated with only one of the first TCI state and the second TCI state is the same as a physical cell identity of the first serving cell, the one of the first TCI state and the second TCI state whose associated physical cell identity is the same as the physical cell identity of the first serving cell is used for determining the quasi co-location parameter of the first signal.

As one embodiment, the first signal is a PDSCH; when a physical cell identity associated with only one of the first TCI state and the second TCI state is the same as a physical cell identity of the first serving cell, the one of the first TCI state and the second TCI state whose associated physical cell identity is the same as the physical cell identity of the first serving cell is used for determining the quasi co-location parameter of the first signal.

As one embodiment, the first signal is one of the first type of PDSCH or the second type of PDSCH; and when a physical cell identity associated with only one of the first TCI state and the second TCI state is the same as a physical cell identity of the first serving cell, the one of the first TCI state and the second TCI state whose associated physical cell identity is the same as the physical cell identity of the first serving cell is used for determining the quasi co-location parameter of the first signal.

As one embodiment, the first signal is an aperiodic CSI-RS.

As one embodiment, when only a physical cell identity associated with the first TCI state among the first TCI state and the second TCI state is the same as the physical cell identity of the first serving cell, the first TCI state is used for determining the quasi co-location parameter of the first signal.

As one embodiment, when only a physical cell identity associated with the second TCI state among the first TCI state and the second TCI state is the same as the physical cell identity of the first serving cell, the second TCI state is used for determining the quasi co-location parameter of the first signal.

### Embodiment 14

Embodiment 14 illustrates a structural block diagram of a processing apparatus used in a first node device according to one embodiment of the present application; as shown in FIG. 14. In FIG. 14, a processing apparatus 1200 in a first node device comprises at least a first receiver 1201 of the first receiver 1201 or a first transmitter 1202, and the first transmitter 1202 is optional.

As one embodiment, the first node device is a user equipment.

As one embodiment, the first node device is a relay node device.

As one embodiment, the first receiver 1201 comprises at least one of {an antenna 452, a receiving device 454, a receiving processor 456, a multi-antenna receiving processor 458, a controller/processor 459, a memory 460, a data source 467} in Embodiment 4.

As one embodiment, the first transmitter 1202 comprises at least one of {an antenna 452, a transmitting device 454, a transmitting processor 468, a multi-antenna transmitting processor 457, a controller/processor 459, a memory 460, a data source 467} in Embodiment 4.

A first receiver 1201 receives a first information block set; receives first signaling; and receives a first signal;
in Embodiment 14, the first information block set indicates a first TCI state and a second TCI state; the first TCI state and the second TCI state are respectively applied to a first type of PDSCH and a second type of PDSCH in a first serving cell, or the first TCI state and the second TCI state are two TCI states configured for the first serving cell; and the first signaling is used for scheduling or triggering the first signal, and a quasi co-location parameter of the first signal depends on whether a physical cell identity associated with at least one of the first TCI state and the second TCI state is the same as a physical cell identity of the first serving cell.

As one embodiment, the first receiver 1201 receives a second information block set; wherein the second information block set is carried by higher layer signaling, and the second information block set is used for configuring N CORESETs of the first serving cell, N being a positive integer greater than 1; any CORESET of the N CORESETs belongs to a first CORESET pool or a second CORESET pool, at least one CORESET of the N CORESETs belongs to the first CORESET pool, at least one CORESET of the N CORESETs belongs to the second CORESET pool, the first CORESET pool comprises at least one CORESET, the second CORESET pool comprises at least one CORESET, and the first CORESET pool and the second CORESET pool are different; the first TCI state and the second TCI state are respectively applied to a first type of PDSCH and a second type of PDSCH in the first serving cell; and a PDCCH scheduling the first type of PDSCH belongs to the first CORESET pool, and a PDCCH scheduling the second type of PDSCH belongs to the second CORESET pool.

As one embodiment, the quasi co-location parameter of the first signal depends on whether a physical cell identity associated with a target TCI state is the same as a physical cell identity of the first serving cell, the target TCI state being one of the first TCI state or the second TCI state; a CORESET to which the first signaling belongs belongs to one of the first CORESERT pool or the second CORESERT pool, and a target CORESET pool is one CORESET pool of the first CORESET pool and the second CORESET pool that comprises the CORESET to which the first signaling belongs; when the target CORESET pool is the first CORESET pool, the target TCI state is the first TCI state; and when the target CORESET pool is the second CORESERT pool, the target TCI state is the second TCI state.

As one embodiment, when a physical cell identity associated with the target TCI state is a physical cell identity of the first serving cell, the target TCI state is used for determining the quasi co-location parameter of the first signal; when the physical cell identity associated with the target TCI state is different from the physical cell identity of the first serving cell, a reference TCI state is used for determining the quasi co-location parameter of the first signal; and the reference TCI state is a TCI state configured for a reference CORESET, and the reference CORESET is a CORESET with a smallest index that is associated with a monitored search space and belongs to the target CORESET pool in a most recent time slot where the first node monitors one or more CORESETs belonging to the target CORESET pool.

As one embodiment, the quasi co-location parameter of the first signal depends on whether a physical cell identity associated with the target TCI state is the same as the physical cell identity of the first serving cell if and only if a first condition is satisfied; and the first condition comprises: the first node is configured to monitor a first type of DCI in at least one search space set associated with a CORESET in the target CORESET pool.

As one embodiment, the quasi co-location parameter of the first signal depends on whether physical cell identities respectively associated with the first TCI state and the second TCI state are the same as the physical cell identity of the first serving cell; and when the physical cell identities respectively associated with the first TCI state and the second TCI state are both the same as the physical cell identity of the first serving cell, one of the first TCI state or the second TCI state is used for determining the quasi co-location parameter of the first signal.

As one embodiment, when a physical cell identity associated with only one of the first TCI state and the second TCI state is the same as a physical cell identity of the first serving cell, the one of the first TCI state and the second TCI state whose associated physical cell identity is the same as the physical cell identity of the first serving cell is used for determining the quasi co-location parameter of the first signal.

As one embodiment, the first node device further comprises:
a first transmitter 1202 for sending a third signal;
wherein the first signal is a PDSCH, and the third signal is used for indicating whether the first signal is correctly received; or, the first signal is an aperiodic CSI-RS, and the third signal comprises CSI (Channel State Information) calculated based on measurement of the first signal.

As one embodiment, the quasi co-location parameter of the first signal depends on whether a physical cell identity associated with a target TCI state is the same as a physical cell identity of the first serving cell, the target TCI state being one of the first TCI state or the second TCI state.

As one embodiment, when a physical cell identity associated with the target TCI state is a physical cell identity of the first serving cell, the target TCI state is used for determining the quasi co-location parameter of the first signal; when the physical cell identity associated with the target TCI state is different from the physical cell identity of the first serving cell, a reference TCI state is used for determining the quasi co-location parameter of the first signal; and the reference TCI state is one TCI state configured for a reference CORESET; and the reference CORESET is a CORESET with the smallest index that is associated with a monitored search space in a most recent slot where the first node monitors one or more CORESETs of the first serving cell.

### Embodiment 15

Embodiment 15 illustrates a structural block diagram of a processing apparatus used in a second node device according to one embodiment of the present application; as shown in FIG. 15. In FIG. 15, a processing apparatus 1300 in a second node device comprises at least a second transmitter 1301 of the second transmitter 1301 or a second receiver 1302, and the second receiver 1302 is optional.

As one embodiment, the second node device is a base station device.

As one embodiment, the second node device is a user equipment.

As one embodiment, the second node device is a relay node device.

As one embodiment, the second transmitter 1301 comprises at least one of {an antenna 420, a transmitting device 418, a transmitting processor 416, a multi-antenna transmitting processor 471, a controller/processor 475, a memory 476} in Embodiment 4.

As one embodiment, the second receiver 1302 comprises at least one of {an antenna 420, a receiving device 418, a receiving processor 470, a multi-antenna receiving processor 472, a controller/processor 475, a memory 476} in Embodiment 4.

A second transmitter 1301 sends a first information block set; sends first signaling; and sends a first signal;
in Embodiment 15, the first information block set indicates a first TCI state and a second TCI state; the first TCI state and the second TCI state are respectively applied to a first type of PDSCH and a second type of PDSCH in the first serving cell, or the first TCI state and the second TCI state are two TCI states configured for the first serving cell; and the first signaling is used for scheduling or triggering the first signal, and a quasi co-location parameter of the first signal depends on whether a physical cell identity associated with at least one of the first TCI state and the second TCI state is the same as a physical cell identity of the first serving cell.

As one embodiment, the second transmitter 1301 sends a second information block set; wherein the second information block set is carried by higher layer signaling, and the second information block set is used for configuring N CORESETs of the first serving cell, N being a positive integer greater than 1; any CORESET of the N CORESETs belongs to a first CORESET pool or a second CORESET pool, at least one CORESET of the N CORESETs belongs to the first CORESET pool, at least one CORESET of the N CORESETs belongs to the second CORESET pool, the first CORESET pool comprises at least one CORESET, the second CORESET pool comprises at least one CORESET, and the first CORESET pool and the second CORESET pool are different; the first TCI state and the second TCI state are respectively applied to a first type of PDSCH and a second type of PDSCH in the first serving cell; and a PDCCH scheduling the first type of PDSCH belongs to the first CORESET pool, and a PDCCH scheduling the second type of PDSCH belongs to the second CORESET pool.

As one embodiment, the quasi co-location parameter of the first signal depends on whether a physical cell identity associated with a target TCI state is the same as a physical cell identity of the first serving cell, the target TCI state being one of the first TCI state or the second TCI state; a CORESET to which the first signaling belongs belongs to one of the first CORESERT pool or the second CORESERT pool, and a target CORESET pool is one CORESET pool of the first CORESET pool and the second CORESET pool that comprises the CORESET to which the first signaling belongs; when the target CORESET pool is the first CORESERT pool, the target TCI state is the first TCI state; and when the target CORESET pool is the second CORESERT pool, the target TCI state is the second TCI state.

As one embodiment, when a physical cell identity associated with the target TCI state is a physical cell identity of the first serving cell, the target TCI state is used for determining the quasi co-location parameter of the first signal; when the physical cell identity associated with the target TCI state is different from the physical cell identity of the first serving cell, a reference TCI state is used for determining the quasi co-location parameter of the first signal; and the reference TCI state is a TCI state configured for a reference CORESET, and the reference CORESET is a CORESET with a smallest index that is associated with a monitored search space and belongs to the target CORESET pool in a most recent time slot where the first node monitors one or more CORESETs belonging to the target CORESET pool.

As one embodiment, the quasi co-location parameter of the first signal depends on whether a physical cell identity associated with the target TCI state is the same as the physical cell identity of the first serving cell if and only if a first condition is satisfied; and the first condition comprises: a target recipient of the first signal is configured to monitor a first type of DCI in at least one search space set associated with a CORESET in the target CORESET pool.

As one embodiment, the quasi co-location parameter of the first signal depends on whether physical cell identities respectively associated with the first TCI state and the second TCI state are the same as the physical cell identity of the first serving cell; and when the physical cell identities respectively associated with the first TCI state and the second TCI state are both the same as the physical cell identity of the first serving cell, one of the first TCI state or the second TCI state is used for determining the quasi co-location parameter of the first signal.

As one embodiment, when a physical cell identity associated with only one of the first TCI state and the second TCI state is the same as a physical cell identity of the first serving cell, the one of the first TCI state and the second TCI state whose associated physical cell identity is the same as the physical cell identity of the first serving cell is used for determining the quasi co-location parameter of the first signal.

As one embodiment, the second node device further comprises:
a second receiver 1302 for receiving a third signal;
wherein the first signal is a PDSCH, and the third signal is used for indicating whether the first signal is correctly received; or, the first signal is an aperiodic CSI-RS, and the third signal comprises CSI (Channel State Information) calculated based on measurement of the first signal.

As one embodiment, the quasi co-location parameter of the first signal depends on whether a physical cell identity associated with a target TCI state is the same as a physical cell identity of the first serving cell, the target TCI state being one of the first TCI state or the second TCI state.

As one embodiment, when a physical cell identity associated with the target TCI state is a physical cell identity of the first serving cell, the target TCI state is used for determining the quasi co-location parameter of the first signal; when the physical cell identity associated with the target TCI state is different from the physical cell identity of the first serving cell, a reference TCI state is used for determining the quasi co-location parameter of the first signal; and the reference TCI state is one TCI state configured for a reference CORESET; and the reference CORESET is a CORESET with the smallest index that is associated with a monitored search space in a most recent slot where the first node monitors one or more CORESETs of the first serving cell.

Those skilled in the art will appreciate that all or some of the steps in the above-mentioned method may be implemented by instructing relevant hardware by a program, where the program can be stored in a computer-readable storage medium, such as a read-only memory, a hard disk or an optical disk. Optionally, all or some of the steps of the above-mentioned embodiments may also be implemented using one or more integrated circuits. Correspondingly, each module unit in the above-mentioned embodiment can be implemented either in a hardware form or as software functional modules. The present application is not limited to any specific combination form of hardware and software. User equipment, terminals and UE in the present application include but are not limited to wireless communication equipment such as drones, communication modules on drones, remote-controlled aircrafts, flying machines, small aircrafts, mobile phones, tablets, notebook computers, vehicle communication equipment, wireless sensors, network cards, Internet of Things terminals, RFID terminals, NB-IOT terminals, MTC (Machine Type Communication) terminals, eMTC (enhanced MTC) terminals, data cards, network cards, vehicle communication equipment, low-cost mobile phones, and low-cost tablets. The base station or system equipment in the present application includes but is not limited to wireless communication equipment such as macro cellular base stations, micro cellular base stations, home base stations, relay base stations, gNB (NR Node B) NR Node B, TRPs (Transmit Receive Points).

The above is only a preferred embodiment of the present application and is not intended to limit the scope of protection of the present application. For any changes and modifications made based on the embodiments described in the specification, if similar partial or all technical effects can be obtained, it should be regarded as obvious and within the scope of the protection of the present invention.

## Claims

1. A first node device used for wireless communication, comprising:
a first receiver for receiving a first information block set, receiving first signaling, and receiving a first signal,
wherein the first information block set indicates a first TCI state and a second TCI state, the first TCI state and the second TCI state are respectively applied to a first type of PDSCH and a second type of PDSCH in a first serving cell, or the first TCI state and the second TCI state are two TCI states configured for the first serving cell, and the first signaling is used for scheduling or triggering the first signal, and a quasi co-location parameter of the first signal depends on whether a physical cell identity associated with at least one of the first TCI state and the second TCI state is the same as a physical cell identity of the first serving cell.

2. The first node device according to claim 1, comprising:
the first receiver for receiving a second information block set,
wherein the second information block set is carried by higher layer signaling, and the second information block set is used for configuring N CORESETs of the first serving cell, N being a positive integer greater than 1; any CORESET of the N CORESETs belongs to a first CORESET pool or a second CORESET pool, at least one CORESET of the N CORESETs belongs to the first CORESET pool, at least one CORESET of the N CORESETs belongs to the second CORESET pool, the first CORESERT pool comprises at least one CORESET, the second CORESET pool comprises at least one CORESET, and the first CORESET pool and the second CORESET pool are different; the first TCI state and the second TCI state are respectively applied to the first type of PDSCH and the second type of PDSCH in the first serving cell; and PDCCH scheduling the first type of PDSCH belongs to the first CORESET pool, and PDCCH scheduling the second type of PDSCH belongs to the second CORESET pool.

3. The first node device according to claim 2, wherein the quasi co-location parameter of the first signal depends on whether a physical cell identity associated with a target TCI state is the same as a physical cell identity of the first serving cell, the target TCI state being one of the first TCI state or the second TCI state; a CORESET to which the first signaling belongs belongs to one of the first CORESERT pool or the second CORESERT pool, and a target CORESET pool is one CORESET pool of the first CORESET pool and the second CORESET pool that comprises the CORESET to which the first signaling belongs; when the target CORESET pool is the first CORESERT pool, the target TCI state is the first TCI state; and when the target CORESET pool is the second CORESERT pool, the target TCI state is the second TCI state.

4. The first node device according to claim 3, wherein when the physical cell identity associated with the target TCI state is the physical cell identity of the first serving cell, the target TCI state is used for determining the quasi co-location parameter of the first signal; when the physical cell identity associated with the target TCI state is different from the physical cell identity of the first serving cell, a reference TCI state is used for determining the quasi co-location parameter of the first signal; and the reference TCI state is a TCI state configured for a reference CORESET, and the reference CORESET is a CORESET with a smallest index that is associated with a monitored search space and belongs to the target CORESET pool in a most recent time slot where the first node monitors one or more CORESETs belonging to the target CORESET pool.

5. The first node device according to claim 3 or 4, wherein the quasi co-location parameter of the first signal depends on whether the physical cell identity associated with the target TCI state is the same as the physical cell identity of the first serving cell if and only if a first condition is satisfied, and the first condition comprises: the first node is configured to monitor a first type of DCI in at least one search space set associated with a CORESET in the target CORESET pool.

6. The first node device according to claim 1 or 2, wherein the quasi co-location parameter of the first signal depends on whether physical cell identities respectively associated with the first TCI state and the second TCI state are the same as the physical cell identity of the first serving cell; and when the physical cell identities respectively associated with the first TCI state and the second TCI state are both the same as the physical cell identity of the first serving cell, one of the first TCI state or the second TCI state is used for determining the quasi co-location parameter of the first signal.

7. The first node device according to claim 6, wherein when the physical cell identity associated with only one of the first TCI state and the second TCI state is the same as the physical cell identity of the first serving cell, the one of the first TCI state and the second TCI state whose associated physical cell identity is the same as the physical cell identity of the first serving cell is used for determining the quasi co-location parameter of the first signal.

8. A second node device used for wireless communication, comprising:
a second transmitter for sending a first information block set, sending first signaling, and sending a first signal,
wherein the first information block set indicates a first TCI state and a second TCI state, the first TCI state and the second TCI state are respectively applied to a first type of PDSCH and a second type of PDSCH in a first serving cell, or the first TCI state and the second TCI state are two TCI states configured for the first serving cell, and the first signaling is used for scheduling or triggering the first signal, and a quasi co-location parameter of the first signal depends on whether a physical cell identity associated with at least one of the first TCI state and the second TCI state is the same as a physical cell identity of the first serving cell.

9. A method for use in a first node for wireless communication, comprising:
receiving a first information block set, receiving first signaling, and receiving a first signal,
wherein the first information block set indicates a first TCI state and a second TCI state, the first TCI state and the second TCI state are respectively applied to a first type of PDSCH and a second type of PDSCH in a first serving cell, or the first TCI state and the second TCI state are two TCI states configured for the first serving cell, and the first signaling is used for scheduling or triggering the first signal, and a quasi co-location parameter of the first signal depends on whether a physical cell identity associated with at least one of the first TCI state and the second TCI state is the same as a physical cell identity of the first serving cell.

10. A method for use in a second node for wireless communication, comprising:
sending a first information block set, sending first signaling, and sending a first signal,
wherein the first information block set indicates a first TCI state and a second TCI state, the first TCI state and the second TCI state are respectively applied to a first type of PDSCH and a second type of PDSCH in a first serving cell, or the first TCI state and the second TCI state are two TCI states configured for the first serving cell, and the first signaling is used for scheduling or triggering the first signal, and a quasi co-location parameter of the first signal depends on whether a physical cell identity associated with at least one of the first TCI state and the second TCI state is the same as a physical cell identity of the first serving cell.
